# EUROPÄISCHE PATENTANMELDUNG

(11) **EP 4 734 304 A1**
(43) Veröffentlichungstag der Anmeldung: **29.04.2026**
(21) Anmeldenummer: 25207373.9
(22) Anmeldetag: 07.10.2025
(51) Int. Cl.: H02G 3/06, H02G 3/04

(54) **KABELBAHNSYSTEM UND KABELBAHN**

(30) Priorität: 28.10.2024 EP 24209316
(71) Anmelder: Zurecon AG, 9053 Teufen AR (CH)
(72) Erfinder: Gerster, Alexander, 8006 Zürich (CH); Obrist, Roland, 7504 Pontresina (CH); Kasper, Gian, 5742 Kölliken (CH)
(74) Vertreter: Rutz & Partner

(57) **Zusammenfassung**

Das Kabelbahnsystem, das zur Erstellung einer Kabelbahn (1) vorgesehen ist, umfasst wenigstens ein erstes und ein zweites Kabelbahnsegment (1A, 1B), die gleichartig oder identisch ausgebildet sind und die je einen Kabelbahnboden (11) und beidseits einstückig daran anschliessende und dazu senkrecht oder geneigt ausgerichtete Kabelbahnwände (12), eine gerade oder entlang einer Kurve verlaufende Kabelbahnachse (x), einen Kabelbahnquerschnitt (B) und Kabelbahnöffnungen (113, 123) aufweisen, und eine Verbindungsvorrichtung (5), die zum Verbinden des ersten und zweiten Kabelbahnsegments (1A, 1B) vorgesehen ist, die einen Verbinderboden (511) und beidseits einstückig daran anschliessende und dazu senkrecht oder geneigt ausgerichtete Verbinderwände (512) aufweist, die ein U-Profil mit einer Verbinderachse (y) und einem Verbinderquerschnitt (Q) aufweist, die bezüglich einer Symmetrielinie (L) in ein erstes Verbindersegment (5A) und in ein zweites Verbindersegment (5B) unterteilt ist, die identisch oder funktionsgleich ausgebildet und in entgegengesetzte Richtungen ausgerichtet sind, wobei das erste Verbindersegment (5A) mit ersten Verbindungselementen (5113A) und/oder mit ersten Kopplungselementen (5123A) versehen und damit durch Eingriff in entsprechende Kabelbahnöffnungen (113, 123) mit dem ersten Kabelbahnsegment (1A) verbindbar ist, und das zweite Verbindersegment (5B) mit zweiten Verbindungselementen (5113B) und/oder mit zweiten Kopplungselementen (5123B) versehen und damit durch Eingriff in entsprechende Kabelbahnöffnungen (113, 123) mit dem zweiten Kabelbahnsegment (1B) verbindbar ist. Erfindungsgemäss ist vorgesehen, dass der Verbinderquerschnitt (Q) der Verbindungsvorrichtung (5) kleiner ist als der Kabelbahnquerschnitt (B), sodass die Verbindungsvorrichtung (5) in die Kabelbahnsegmente (1A, 1B) ersetzbar ist und dass die ersten und zweiten Verbindungselemente (5113A, 5113B) und/oder die ersten und zweiten Kopplungselemente (5123A, 5123B) nach aussen gerichtet und beim Einsetzen der Verbindungsvorrichtung (5) in die Kabelbahnsegmente (1A, 1B) durch Kabelbahnöffnungen (113, 123) zur Aussenseite der Kabelbahnsegmente (1A, 1B) führbar sind. Die Kabelbahn (1) umfasst wenigstens zwei Kabelbahnsegmente (1A, 1B) und wenigstens eine Verbindungsvorrichtung (5) des Kabelbahnsystems.

## Beschreibung

Die Erfindung betrifft ein Kabelbahnsystem mit wenigstens zwei durch eine Verbindungsvorrichtung miteinander verbindbaren Kabelbahnsegmenten und eine anhand des Kabelbahnsystems gefertigte Kabelbahn, die wenigstens zwei Kabelbahnsegmente umfasst, die durch eine Verbindungsvorrichtung miteinander verbunden sind.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender in metallenen Kabelbahnen, auch Kabelkanäle oder Kabelpritschen genannt, beispielsweise von einem Schaltfeld zu Verbrauchern geführt. Kabelbahnen sowie Tragvorrichtungen für Kabelbahnen, die typischerweise Halteprofile, die an einer Wand oder Decke montierbar sind, und mit den Halteprofilen verbindbare Ausleger umfassen, sowie Verbindungsvorrichtungen für Kabelbahnsegmente sind beispielsweise im Produktkatalog der LANZ OENSINGEN AG, Juli 2017, beschrieben.

Bauten, in denen Kabelbahnen zu installieren sind, unterscheiden sich jeweils hinsichtlich der Installationswege, die in Abschnitten unterschiedlicher Länge entlang von Geraden und Kurven verlaufen. Die Module von Kabelbahnen, insbesondere die Kabelbahnsegmente, sind daher mit Abmessungen bereitzustellen, die es erlauben, eine Kabelbahn entlang dem jeweils vorliegenden Installationsweg zu installieren. Alternativ ist vorzusehen, dass die Module der Kabelbahn, insbesondere die Kabelbahnsegmente, vorzugsweise am Installationsort konfektionierbar sind, damit die Kabelbahn entsprechend den Abmessungen des Installationswegs lokal bereitgestellt und installiert werden kann. Die Kabelbahnsegmente, die vom Hersteller in der erforderlichen Länge bereitgestellt oder durch das Installationspersonal auf die erforderliche Länge gekürzt werden, werden am Installationsort durch Verbindungsvorrichtungen miteinander verbunden, um die Kabelbahn zu realisieren.

Die EP1049226A2 offenbart eine Verbindungsvorrichtung, mittels der stirnseitig aneinander anstossende und mit Wandöffnungen versehene Kabelbahnwände benachbarter Kabelbahnsegmente miteinander verbindbar sind. Die Verbindungsvorrichtung umfasst Verbindungsplatten, die an der Unterseite mit Haken versehen sind. Zur Installation der Verbindungsplatten an den Aussenseiten der Kabelbahnwände werden die Haken von oben in die Wandöffnungen eingeführt und nach unten gegen den Boden des Kabelkanals geschoben. In der Folge werden die Verbindungsplatten gegen die Kabelbahnwände gedreht und anhand eines Sicherungsmittels fixiert, das drehbar oder verschiebbar mit der Verbindungsplatte verbunden ist und in den Abschlussrand der Kabelbahnwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Herstellung und Montage der Verbindungsvorrichtung sind sehr aufwendig. Haken, die in die Montageöffnungen und in den Kabelbahnquerschnitt eingreifen, können Hindernisse für die eingelegten Kabel bilden. Die Verbindungsplatten treten an der Aussenseite der Kabelbahn störend in Erscheinung. Einerseits wird das ästhetische Erscheinungsbild gestört. Andererseits können Ecken und Kanten von Teilen der Verbindungsvorrichtung Verletzungen des Personals verursachen. Zu beachten ist ferner, dass Krafteinwirkungen auf die Kabelbahn, insbesondere Schwingungen in vertikaler Richtung, zumindest teilweise durch die Verbindungsvorrichtung und die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Die BE877466A und die DE8901613U1 offenbaren weitere Verbindungsvorrichtungen mit zwei Verbindungsplatten, die getrennt voneinander auf unterschiedlichen Seiten der Kabelbahnsegmente mit einander zugewandten Kabelbahnwänden verbunden werden. Die Montage einzelner Verbindungsplatten verursacht einen entsprechend hohen Aufwand.

Die CN114142409A offenbart eine weitere Verbindungsvorrichtung für Kabelbahnsegmente. Diese Verbindungsvorrichtung umfasst zwei Seitenplatten, die mit den Aussenseiten benachbarter Kabelbahnwände verbindbar sind und deren Unterseiten vor der Montage durch eine Verbindungsplatte formschlüssig miteinander verbunden werden. Auch diese Verbindungsvorrichtung erfordert einen entsprechend hohen Montageaufwand und tritt nach der Montage an der Aussenseite der Kabelbahn war die störend in Erscheinung.

Die EP3664237A1 offenbart eine Verbindungsvorrichtung für Kabelbahnsegmente, die je ein Bodenelement und beidseits daran anschliessende Kabelbahnwände umfassen, die je einen gebogenen Abschlussrand und gegebenenfalls Wandöffnungen aufweisen. Zur Verbindung der Kabelbahnsegmente sind Verbindungsstäbe, die in die axial zueinander ausgerichteten Abschlussränder der benachbarten Kabelbahnwände der Kabelbahnsegmente eingeführt werden, und Arretierelemente, mittels denen die Kabelbahnsegmente arretierbar sind, vorgesehen. Diese Verbindungsvorrichtung ist nur für entsprechend ausgestaltete Kabelbahnsegmente geeignet und umfasst mehrere Einzelteile, die sequenziell mit den benachbarten Kabelbahnsegmenten zu verbinden sind. Es resultiert somit ein relativ hoher Installationsaufwand.

Die EP4131686 offenbart Kabelbahnsegmente mit asymmetrisch ausgebildeten Endstücken. Benachbarte Kabelbahnsegmente, werden miteinander verbunden, indem die einander zugewandten Endstücke in Bezug zur Kabelbahnachse gegeneinander gedreht, miteinander gekoppelt und anschliessend in einer Rotationsbewegung um die Kabelbahnachse gedreht werden, bis die Endstücke ineinander Einrasten. Die Verbindungsvorrichtung ist somit in die Kabelbahnsegmente integriert, weshalb ein Zuschneiden der Kabelbahnsegmente nicht mehr möglich ist, ohne die Verbindungsvorrichtung zu zerstören. Kabelbahnsegmente einer integrierten Verbindungsvorrichtung sind daher mit unterschiedlichen Längen bereitzustellen, damit die Kabelführungsvorrichtung realisiert werden kann oder müssen nach dem Schneidevorgang aufwändig verschraubt werden.

Die US2023078478A1 offenbart Kabelbahnsegmente, die überlappend miteinander verbindbar sind und hierfür an den einander zugewandten Enden zueinander komplementäre Verbindungsabschnitte aufweisen. Ein erster Verbindungsabschnitt weist zwei durch eine Bodenplatte miteinander verbundene Seitenwände mit einem Verbinderquerschnitt auf, der gegenüber dem Kabelbahnquerschnitt nach aussen derart vergrössert ist, sodass er ein dazu kompatibles Endstück eines Kabelbahnsegments, aufnehmen und umschliessen kann. Auch diese Kabelbahnsegmente sind in ihrer Länge nicht konfektionierbar und müssen in fest vorgegebenen Längen geliefert und installiert werden.

Die EP4254692A1 offenbart weitere Kabelbahnsegmente, die überlappend miteinander verbindbar sind und die dazu an einem Ende einen nach aussen vergrösserten Verbindungsabschnitt mit einem Verbinderquerschnitt aufweisen, der grösser ist als der Kabelbahnquerschnitt. Ferner ist eine kanalförmige Verbindungsvorrichtung offenbart, deren Querschnitt an beiden Enden dem zuvor genannten Verbinderquerschnitt entspricht, so dass diese Verbindungsvorrichtung beidseits ein Endstück eines Kabelbahnsegments aufnehmen und teilweise umschliessen kann.

Die NL2034369B1 offenbart ebenfalls eine kanalförmige Verbindungsvorrichtung, die auf beiden Seiten einen Verbinderabschnitt mit einem Verbinderquerschnitt aufweist, der grösser ist als der Kabelbahnquerschnitt, wodurch zugewandte Endstücke von zwei Kabelbahnsegmenten aufgenommen, aussen überlappt und miteinander verbunden werden können.

Die Kabelbahnsysteme der EP4254692A1 und der NL2034369B1 umfassen somit eine Verbindungsvorrichtung, welche die einander zugewandten Endstücke der miteinander verbundenen Kabelbahnsegmente umschliesst, was mit dem Vorteil verbunden ist, dass die Verbindungsvorrichtung nicht als Hindernis innerhalb des Kabelbahnquerschnitts in Erscheinung tritt.

Nachteilig ist hingegen, dass die Verbindungsvorrichtung auf der Aussenseite der Kabelbahn optisch und mechanisch störend in Erscheinung tritt. Die zusammengesetzte Kabelbahn erscheint nicht einheitlich sondern als Flickwerk mit klar erkennbaren Verbindungsstellen. Insbesondere in Räumlichkeiten, in denen auf ein ästhetisches Erscheinungsbild der Installationen Wert gelegt wird, ist dies unerwünscht. Ferner bildet die aufgesetzte Verbindungsvorrichtung ein mechanisches Hindernis, welches ein Verletzungspotenzial aufweist. Falls der Installateur beispielsweise während seiner Arbeit mit der Hand entlang der Kabelbahn gleitet, kann er sich gegebenenfalls an Kanten der Verbindungsvorrichtung verletzen. Damit die Verbindungsvorrichtung sich nicht selbsttätig von den Kabelbahnsegmenten lösen kann, ist diese mit Kopplungselementen versehen, die nach der Montage der Verbindungsvorrichtung in den Kabelbahnquerschnitt hineinragen und punktuell Hindernisse bilden können, die den Kabelmantel eingelegter Kabel verletzen könnten.

Nachteilig ist ferner, dass die Kabelbahnsegmente mittels der kanalförmigen Verbindungsvorrichtung nicht leicht miteinander verbindbar sind. Beispielsweise wird die Verbindungsvorrichtung auf einen Träger oder Ausleger aufgelegt, wonach die einander zugewandten Endstücke der Kabelbahnsegmente in die Verbindungsvorrichtung eingesetzt werden. Sofern dies nicht symmetrisch erfolgt, besteht die Gefahr, dass die Verbindungsvorrichtung kippt, wenn sie nicht zusätzlich gehalten wird. Alternativ werden die einander zugewandten Endstücke der Kabelbahnsegmente angehoben und nach dem Einschieben der Verbindungsvorrichtung in dieses eingesenkt. Typischerweise muss die Verbindungsvorrichtung festgehalten werden, während die Endstücke der Kabelbahnsegmente in die Verbindungsvorrichtung eingesetzt werden. Beim Installationsvorgang müssen daher mindestens die beiden Kabelbahnsegmente und normalerweise auch die Verbindungsvorrichtung gleichzeitig gehalten und gegeneinander geführt werden, was bei der Installation auf einer Leiter stehend mit erheblichen Schwierigkeiten verbunden ist.

Zu beachten ist zudem, dass bei der Montage dieser Verbindungsvorrichtung an der Unterseite der Kabelbahnsegmente entweder eine Kraft der Endstücke der Kabelbahnsegmente nach unten auf die stationär gehaltene Verbindungsvorrichtung oder eine Kraft von der Verbindungsvorrichtung nach oben gegen die Endstücke der Kabelbahnsegmente ausgeübt wird. Im zweiten Fall müssen die Kabelbahnsegmente festgehalten werden, damit sie bei der Montage der Verbindungsvorrichtung nicht nach oben gestossen werden und die Verbindungsvorrichtung an den Seitenwänden der Kabelbahnwände einrasten kann. Die Ausübung einer grösseren Druckkraft ist daher kaum möglich. Die Verbindung der Kabelbahnsegmente durch Montage einer solchen Verbindungsvorrichtung ist daher mit erheblichem Schwierigkeiten verbunden.

Besonders nachteilig ist ferner, dass nach der Montage einer Verbindungsvorrichtung an der Unterseite der Kabelbahn oder der Kabelbahnsegmente die Unterseite der freiliegenden Kabelbahnsegmente ein erstes Vorrichtungsniveau und die tiefer liegenden Verbindungsvorrichtungen ein tieferliegendes zweites Vorrichtungsniveau definieren, was mit erheblichen Nachteilen verbunden ist. Sofern eine Kabelbahn an der Unterseite mit mehreren Verbindungsvorrichtungen versehen ist, kann der Fall auftreten, dass eine Verbindungsvorrichtung auf einem ersten Ausleger und anschliessend ein Kabelbahnsegment auf einem zweiten Ausleger aufliegt und die Kabelbahnsegmente daher nicht mehr in einer Ebene ausgerichtet, sondern fallweise gegeneinander geneigt sind. Sequenziell unterschiedlich ausgerichtete Kabelbahnsegmente hinterlassen wiederum einen unvorteilhaften ästhetischen Eindruck. Durch die gegenseitige Neigung der Kabelbahnsegmente resultieren zwischen den Kabelbahnen und den Verbindungsvorrichtungen zudem mechanische Spannungen, die beispielsweise eine Deformation von Kopplungselementen der Verbindungsvorrichtung verursachen können.

Ferner ist zu beachten, dass auf Ausleger aufgelegte und durch Verbindungsvorrichtungen miteinander verbundenen Kabelbahnsegmente während des Installationsvorgangs oft entlang der Längsachse der Kabelbahn verschoben werden müssen. Eine an der Unterseite der Kabelbahnsegmente montierte Verbindungsvorrichtung, die miteinander verbundene Kabelbahnsegmente nach unten überragt, kann beim Verschiebevorgang daher an einem Ausleger anschlagen und weggerissen werden. Eine Verschiebung der Kabelbahn oder der Kabelbahnsegmente kann daher nur erfolgen, wenn die Verbindungsvorrichtungen vor der Verschiebung bedarfsweise angehoben werden, was die Installationsarbeiten wesentlich behindert.

Der vorliegenden Erfindung liegt daher die Aufgabe zugrunde, ein verbessertes Kabelbahnsystem mit wenigstens zwei Kabelbahnsegmenten und wenigstens einer Verbindungsvorrichtung, mittels der die Kabelbahnsegmente miteinander verbindbar sind, zu schaffen. Ferner ist eine anhand dieses Kabelbahnsystems gefertigte Kabelbahn zu schaffen, die wenigstens zwei Kabelbahnsegmente umfasst, die durch eine Verbindungsvorrichtung miteinander verbunden sind.

Das Kabelbahnsystem soll es erlauben, Kabelbahnsegmente durch eine Verbindungsvorrichtung in einfacher Weise miteinander zu verbinden, ohne dass die Verbindungsvorrichtung bei einer installierten Kabelbahn störend in Erscheinung tritt.

Die zu installierenden Kabelbahnsegmente sollen am Installationsort bedarfsweise auf erforderliche Längen zugeschnitten und in einfacher Weise mit wenigen Handgriffen miteinander verbunden werden können.

Einerseits soll die Verbindungsvorrichtung optisch möglichst nicht in Erscheinung treten, sodass die Kabelbahn auch an den Verbindungsstellen einen ästhetisch vorteilhaften Eindruck hinterlässt.

Durch Verbindungsvorrichtungen miteinander verbundene Kabelbahnsegmente sollen nach der Installation, unabhängig von der Position der Verbindungsvorrichtungen und der Ausleger, in einer Ebene ausgerichtet sein, sodass auch diesbezüglich ein vorteilhafter ästhetischer Eindruck resultiert und mechanische Spannungen vermieden werden.

Andererseits soll vermieden werden, dass Teile der Verbindungsvorrichtung innerhalb oder ausserhalb der Kabelbahn störende Hindernisse bilden, die nach innen den Kabelbahnquerschnitt wesentlich reduzieren und installierte Kabel verletzen können oder die nach aussen Gefährdungsstellen bilden, an denen sich das Installationspersonal verletzen könnte. Insbesondere sollen Kopplungselemente oder Verbindungselemente innerhalb des Kabelbahnquerschnitts nicht mechanisch störend in Erscheinung treten und Verletzungen der eingelegten Kabel verursachen können.

Weiterhin soll es insbesondere bei Installationsarbeiten möglich sein, die Kabelbahn oder die durch Verbindungsvorrichtungen miteinander verbundenen Kabelbahnsegmente, axial zu verschieben, ohne dass die Verbindungsvorrichtung an einer Installationsvorrichtung, insbesondere einem Ausleger, auf den die Kabelbahn aufgelegt wird, anstossen und beschädigt werden kann.

Die auszuführenden Bewegungen zur Verbindung der Kabelbahnsegmente sollen einfach ausgeführt werden können und vorzugsweise nur lineare Bewegungen umfassen. Die Installation der Kabelbahn soll daher auch über Kopf, beispielsweise auf einer Leiter stehend, bei mangelhafter Beleuchtung und reduzierter Bewegungsfreiheit, einfach und sicher erfolgen können.

Vorzugsweise soll nur die Manipulation der Verbindungsvorrichtung erforderlich sein, ohne dass die Kabelbahnsegmente manuell gehalten werden müssen. Die Verbindungsvorrichtung soll kraftvoll gegen die Endstücke der miteinander zu verbindenden Kabelbahnsegmente führbar sein. Es soll somit vermieden werden, dass beim Installationsvorgang zwei oder drei Teile gleichzeitig gehalten werden müssen.

Die Verbindungsvorrichtungen sollen es erlauben, stabile Verbindung zwischen Kabelbahnsegmenten zu erstellen, die auch grösseren Krafteinwirkungen standhalten. Sofern Verbindungsvorrichtungen nach der Installation der Kabelbahn Positionen zwischen zwei Auslegern oder auf einem Ausleger liegen, an welchen Positionen üblicherweise die maximale Durchbiegung auftritt, soll eine Durchbiegung vorzugsweise signifikant reduziert werden.

Die Verbindungsvorrichtung soll einfach ausgestaltet sein, möglichst wenig Elemente umfassen und daher mit geringem Material- und Kostenaufwand bereitgestellt werden können. Die Verbindungsvorrichtung soll möglichst kein zusätzliches Verbindungsmaterial, wie Schrauben und dergleichen, aufweisen, das separat bereitgestellt und vom Installationspersonal mitgetragen werden muss. Geschraubte Verbindungen, bei denen die Gefahr des selbsttätigen Lösens, beispielsweise bei Krafteinwirkungen oder Vibrationen besteht, und die mit grossem Zeitaufwand zu realisieren sind sollen vermieden werden.

Diese Aufgabe wird mit einem Kabelbahnsystem nach Anspruch 1 und einer Kabelbahn nach Anspruch 11 gelöst. Vorteilhafte Ausgestaltungen der Erfindung sind in weiteren Ansprüchen angegeben.

Das Kabelbahnsystem, das zur Erstellung einer Kabelbahn vorgesehen ist, umfasst wenigstens ein erstes und ein zweites Kabelbahnsegment, die gleichartig oder identisch ausgebildet sind und die je einen Kabelbahnboden und beidseits einstückig daran anschliessende und dazu senkrecht oder geneigt ausgerichtete Kabelbahnwände, eine gerade oder entlang einer Kurve verlaufende Kabelbahnachse, einen Kabelbahnquerschnitt und Kabelbahnöffnungen aufweisen, und eine Verbindungsvorrichtung,
- die zum Verbinden des ersten und zweiten Kabelbahnsegments vorgesehen ist,
- die einen Verbinderboden und beidseits einstückig daran anschliessende und dazu senkrecht oder geneigt ausgerichtete Verbinderwände aufweist,
- die ein U-Profil mit einer Verbinderachse und einem Verbinderquerschnitt aufweist, die bezüglich einer Symmetrielinie in ein erstes Verbindersegment und in ein zweites Verbindersegment unterteilt ist, die identisch oder funktionsgleich ausgebildet und in entgegengesetzte Richtungen ausgerichtet sind, wobei
- das erste Verbindersegment mit ersten Verbindungselementen und/oder mit ersten Kopplungselementen versehen und damit durch Eingriff in entsprechende Kabelbahnöffnungen mit dem ersten Kabelbahnsegment verbindbar ist, und
- das zweite Verbindersegment mit zweiten Verbindungselementen und/oder mit zweiten Kopplungselementen versehen und damit durch Eingriff in entsprechende Kabelbahnöffnungen mit dem zweiten Kabelbahnsegment verbindbar ist.

Erfindungsgemäss ist vorgesehen, dass der Verbinderquerschnitt der Verbindungsvorrichtung kleiner ist als der Kabelbahnquerschnitt, sodass die Verbindungsvorrichtung in die Kabelbahnsegmente ersetzbar ist und dass die ersten und zweiten Verbindungselemente und/oder die ersten und zweiten Kopplungselemente nach aussen gerichtet und beim Einsetzen der Verbindungsvorrichtung in die Kabelbahnsegmente durch Kabelbahnöffnungen zur Aussenseite der Kabelbahnsegmente führbar sind.

Die Kabelbahn umfasst wenigstens zwei Kabelbahnsegmente und wenigstens eine Verbindungsvorrichtung dieses Kabelbahnsystems.

Die zu installierenden Kabelbahnsegmente können am Installationsort bedarfsweise auf erforderliche Längen zugeschnitten und anhand einer Verbindungsvorrichtung mit wenigen Handgriffen miteinander verbunden werden.

Das Kabelbahnsystem erlaubt es, Kabelbahnsegmente durch eine Verbindungsvorrichtung in einfacher Weise miteinander zu verbinden, ohne dass die Verbindungsvorrichtung bei einer installierten Kabelbahn optisch oder mechanisch störend in Erscheinung tritt. Die Verbindungsvorrichtung wird in den Kabelbahnquerschnitt der Kabelbahnsegmente eingesetzt.

Dabei kann die Verbindungsvorrichtung beispielsweise senkrecht von oben oder frontal parallel zur Kabelbahnachse entlang einer Montagerichtung in die Kabelbahnsegmente eingesetzt werden. Entsprechend der vorgesehen Montagerichtung sind ein Teil oder alle der Verbindungselemente und/oder Kopplungselemente derart auszurichten, dass sie in zugeordnete Öffnungen der Kabelbahnsegmente formschlüssig eingreifen oder einrasten und zuverlässige Verbindungen erstellen können, die vorzugsweise nur mittels eines Werkzeugs wieder lösbar sind. Beispielsweise erstrecken sich Verbindungselemente oder Kopplungselemente entlang oder parallel zur Montagerichtung. Verbindungselemente und/oder Kopplungselemente werden beispielsweise in Form von Zungen ausgebildet, die sich in Montagerichtung erstrecken. Sofern Verbindungselemente und/oder Kopplungselemente eine Rastkante aufweisen, die an einem Rand einer Kabelbahnöffnung eingreifen kann, so ist diese Rastkante vorzugsweise senkrecht zur Montagerichtung ausgerichtet.

Sofern die Verbindungsvorrichtung zum Einsetzen in eine Montagerichtung von oben senkrecht zur Kabelbahnachse vorgesehen ist, können die Kabelbahnsegmente auf Ausleger, die beispielsweise von Deckenstützen gehalten sind, aufgelegt werden, wonach die Verbindungsvorrichtung in einfacher Weise manuell entlang der Montagerichtung eingesetzt werden kann. Dabei ist es möglich, die Verbindungsvorrichtung mit erheblicher Kraft gegen die Kabelbahnsegmente zu drücken, die von den Auslegern sicher gehalten sind.

Einfach und vorteilhaft ist auch die axiale Verbindung mit Einführung der Verbindungsvorrichtung in einer Montagerichtung parallel zur Kabelbahnachse in den Kabelbahnquerschnitt. Bei dieser Ausgestaltung der Verbindungsvorrichtung kann diese auch zuerst mit nur einem
Die auszuführenden Bewegungen zur Verbindung der Kabelbahnsegmente können einfach ausgeführt werden und umfassen nur eine lineare Bewegung der Verbindungsvorrichtung, die kraftvoll ausgeführt werden kann, ohne dass die Kabelbahnsegmente manuell gehalten oder angehoben werden müssen. Die Installation der Kabelbahn kann daher auch über Kopf, beispielsweise auf einer Leiter stehend, bei mangelhafter Beleuchtung und reduzierter Bewegungsfreiheit, einfach und sicher erfolgen. Nach Bereitstellung und Ausrichtung der zu verbindenden Kabelbahnsegmente kann die Verbindungsvorrichtung mit einer Hand über der Stossstelle von oben in die Kabelbahnsegmente eingelegt und anschliessend mit der notwendigen Andruckkraft fixiert werden.

Nach dem Einsetzen der Verbindungsvorrichtung ist diese nicht mehr sichtbar, weshalb die Kabelbahn auch an den Verbindungsstellen einen ästhetisch vorteilhaften Eindruck hinterlässt. Erfindungsgemässe Kabelbahnen können daher auch in Räumen, wie Labors und dergleichen, installiert werden, der ästhetische Eindruck aus Sicht der Bauherrschaft relevant ist.

Weiterhin wird vermieden, dass Teile der Verbindungsvorrichtung ausserhalb der Kabelbahn Hindernisse bilden, an denen sich das Installationspersonal verletzen kann. Die Verbindungsvorrichtung liegt mit dem Verbinderboden und den Verbinderwänden vorzugsweise nahtlos und kraftschlüssig an den Innenseiten der Kabelbahnsegmente an. Die Kanten der Verbindungsvorrichtung sind vorzugsweise gerundet, sodass keine scharfen oder störenden Elemente innerhalb des Kabelbahnquerschnitts auftreten und eingelegte Kabel und Leitungen nicht verletzt werden können. Vorzugsweise weist die Verbindungsvorrichtung eingangsseitig und/oder ausgangsseitig gerundete Eingangsteile auf, welche mit einer Rundung an den eingelegten Kabeln anliegen.

Die miteinander verbundenen Kabelbahnsegmente sind unabhängig von der Position der Ausleger oder Stützelemente stets parallel zueinander ausgerichtet, sodass ein vorteilhaftes Erscheinungsbild resultiert.

Weiterhin kann die Kabelbahn insbesondere bei Installationsarbeiten axial verschoben werden, ohne dass dies behindert werden könnte.

Verbindungselemente oder Kopplungselemente der Verbindungsvorrichtung ragen nicht in den Kabelbahnquerschnitt hinein, sondern sind in Kabelbahnöffnungen nach aussen verlaufend eingeführt, sodass auch diesbezüglich keine störenden Hindernisse innerhalb der Kabelbahn auftreten.

Die Verbindungsvorrichtung erlaubt die stabile Verbindung von Kabelbahnsegmenten, sodass die erstellte Kabelbahn die auch grösseren Krafteinwirkungen standhält. Sofern eine Verbindungsvorrichtung nach der Installation der Kabelbahn an Positionen zwischen zwei Auslegern oder auf einem Ausleger liegen, an welchen Positionen üblicherweise die maximale Durchbiegung auftritt, wird eine Durchbiegung der Kabelbahn durch vorzugsweise ausgestaltete Verbindungsvorrichtungen signifikant reduziert.

Die Verbindungsvorrichtung besteht im Wesentlichen aus einem einzigen Teil, welches aus Kunststoff oder Metall gefertigt, beispielsweise aus einem Blechstück zugeschnitten und geformt ist. Die Verbindungsvorrichtung kann daher mit geringem Aufwand kostengünstig hergestellt und in einfacher Weise montiert werden, wie dies nachstehend beschrieben ist.

Vorzugsweise sind der Verbinderboden und die Verbinderwände bezüglich der senkrecht zur Verbinderachse verlaufenden Symmetrielinie und/oder bezüglich der Verbinderachse symmetrisch angeordnet und ausgebildet. Die Verbindungsvorrichtung ist bezüglich eines zentralen Punkts vorzugsweise punktsymmetrisch ausgebildet, weshalb sich die Bereitstellung der Fertigungswerkzeuge oder Fertigungsverfahren besonders einfach gestaltet.

Die Verbindungsvorrichtungen sind an die zu installierenden Kabelbahnsegmente angepasst und weisen eine fast identische Form auf, weshalb die Verbindungsvorrichtungen ebenso wie die Kabelbahnsegmente vorteilhaft gestapelt, gelagert und transportiert werden können.

Durch die Verbindungsvorrichtung sind zwei an einer Stossstelle stirnseitig gegeneinander ausgerichtete und vorzugsweise aneinander anstossende Kabelbahnsegmente, derart miteinander verbindbar, dass der Verbinderboden an der Innenseite oder Aussenseite des Kabelbahnbodens und die Verbinderwände an den Innenseiten oder Aussenseiten der Kabelbahnwände anliegen, wobei die ersten und zweiten Verbindungselemente in Kabelbahnöffnungen am Kabelbahnboden der Kabelbahnsegmente und/oder die ersten und zweiten Kopplungselemente in Kabelbahnöffnungen in den Kabelbahnwänden der Kabelbahnsegmente eingreifen.

Die Verbindungsvorrichtung kann daher auf der Innenseite oder der Aussenseite der miteinander verbundenen Kabelbahnsegmente angeordnet werden. Die Anordnung der Verbindungsvorrichtung auf der Innenseite der Kabelbahn hat den Vorteil, dass diese an der Aussenseite der Kabelbahn physisch und optisch nicht in Erscheinung tritt. Die aus mehreren Kabelbahnsegmenten zusammengesetzte Kabelbahn erscheint daher durchgehend als Einheit.

Die Verbindungsvorrichtung überlappt die Kabelbahnboden und die Kabelbahnwände der miteinander verbundenen Kabelbahnsegmente, weshalb diese stabil gehalten werden. Zu beachten ist, dass die Kabelbahnsegmente von der Verbindungsvorrichtung an der Stossstelle zusammengehalten werden, weshalb ein Knicken der Kabelbahn an der Verbindungsstelle durch die aneinander anstossende Endstücke der Kabelbahnsegmente sowie durch die überlappende Verbindungsvorrichtung verhindert wird. Die Verbindungsvorrichtung ist daher im Wesentlichen auf Zug und nicht auf Druck belastet. Ein hoher Stützabstand, mit dem Ausleger und damit verbundene Halteprofile installiert werden, kann daher auch im Bereich der Verbindungsstellen, an denen erfindungsgemässe Verbindungsvorrichtungen installiert sind, aufrechterhalten werden.

Der Verbinderquerschnitt der Verbindungsvorrichtung und der vorzugsweise nur wenig grössere Kabelbahnquerschnitt der Kabelbahn oder der Kabelbahnsegmente sind nahezu identisch, weshalb die Verbindungsvorrichtung nach der Installation einen integralen Bestandteil der Kabelbahn bildet und das Einlegen oder die Entnahme von Kabel, Leitungen oder Rohren in die Kabelbahn in keiner Weise behindert.

Vorzugsweise ist vorgesehen, dass im Kabelbahnboden der Kabelbahnsegmente Bodenperforationen und in den Kabelbahnwänden Wandperforationen entlang von Trennlinien angeordnet sind, die in einer Ebene senkrecht zur Kanalachse verlaufen. Die Bodenperforationen und Wandperforationen bilden für jede der Trennlinien eine Solltrennstelle, die mit einem Abstand von benachbarten Kabelbahnöffnungen vorgesehen sind, der entsprechend dem Abstand zwischen der Symmetrielinie der Verbindungsvorrichtung und den ersten und zweiten Verbindungselementen und/oder den ersten und zweiten Kopplungselementen gewählt ist. Nach der Auftrennung einer Solltrennstelle entlang einer der Trennlinien resultieren jeweils Kabelbahnsegmente, die in gleicher Weise an die Verbindungsvorrichtung angepasst sind wie herstellerseitig gelieferte und nicht zugeschnittene Kabelbahnsegmente, die optimal an die Verbindungsvorrichtung angepasst sind.

Vorzugsweise sind die ersten und zweiten Verbindungselemente und/oder die ersten und zweiten Kopplungselemente derart angeordnet, dass die Verbindungsvorrichtung durch eine Verschiebung senkrecht von oben oder frontal parallel zur Kabelbahnachse mit den Kabelbahnsegmenten verbindbar ist. Beispielsweise ist vorgesehen, dass die Verbindungsvorrichtung durch eine kurze lineare Bewegungen mit den Kabelbahnsegmenten verbunden werden kann. Die Verbindung der Kabelbahnsegmente erfolgt daher mit einem einfachen Bewegungsablauf und kann auch unter schwierigen Installationsbedingungen gut durchgeführt werden.

Sofern die Verbindungsvorrichtung senkrecht zur Kabelbahnachse mit den Kabelbahnsegmenten verbunden wird, so werden diese zuerst stirnseitig bis zur Stossstelle gegeneinander geführt, bevor die Verbindungsvorrichtung eingesetzt wird. Falls die Verbindungsvorrichtung hingegen stirnseitig parallel zur Kabelbahnachse in die Kabelbahnsegmente einzuführen ist, so wird die Verbindungsvorrichtung vorzugsweise zuerst in das erste Kabelbahnsegment eingesetzt, wonach das zweite Kabelbahnsegment parallel zur Kabelbahnachse verschoben und mit der Verbindungsvorrichtung verbunden wird. Der Vorgang kann daher vorteilhaft sequenziell erfolgen. Beispielsweise wird jedes der Kabelbahnsegmente vor der Installation einseitig mit einer Verbindungsvorrichtung versehen.

Vorzugsweise ist vorgesehen, dass die ersten und zweiten Verbindungselemente am Verbinderboden angeordnet oder angeformt und zum Eingriff in Kabelbahnöffnungen am Kabelbahnboden der Kabelbahnsegmente vorgesehen sind und/oder dass die ersten und zweiten Kopplungselemente an den Verbinderwänden angeordnet oder angeformt und zum Eingriff in Kabelbahnöffnungen in den Kabelbahnwänden der Kabelbahnsegmente vorgesehen sind.

Die Verbindungselemente und/oder Kopplungselemente können daher mit der Verbindungsvorrichtung verbindbar oder einstückig verbunden sein. Beispielsweise wird die Verbindungsvorrichtung aus einem Blech ausgeschnitten und bedarfsweise gebogen. In die Abwicklung des Blechstücks können zuvor die Verbindungselemente und/oder die Kopplungselemente eingearbeitet werden. Beispielsweise werden die Verbindungselemente und/oder Kopplungselemente ausgeschnitten und aussen gebogen und gegebenenfalls zusätzlich geformt, sodass sie beispielsweise als Rastzungen ausgebildet sind. Durch Einschnitte können Teile der Verbindungsvorrichtung bedarfsweise mit einer höheren Elastizität versehen werden, sodass die Installation der Verbindungsvorrichtung erleichtert wird.

Die Verbindungselemente und/oder Kopplungselemente sind zum Eingriff in die Kabelbahnöffnungen vorgesehen und beispielsweise als elastische oder unelastische Rastelemente, Haken oder Nocken ausgebildet und entsprechend der Ausrichtung der Kabelbahnöffnungen und/oder dem Bewegungsverlauf der Verbindungsvorrichtung relativ zu den Kabelbahnsegmenten ausgerichtet.

Die Kabelbahnöffnungen sind beispielsweise als Langlöcher ausgebildet. Alternativ können die Kabelbahnöffnungen auch als Schlüssellochöffnungen ausgebildet sein, die ein grösseres Teil zur Einführung der Verbindungselemente und/oder Kopplungselemente und ein kleineres Teil zur Verriegelung der Verbindungselemente und/oder Kopplungselemente aufweisen.

Sofern die Verbindungselemente und/oder die Kopplungselemente zungenförmig ausgebildet sind, so können sie senkrecht zur Verbinderachse nach unten oder parallel zur Verbinderachse ausgerichtet sein. Die beispielsweise zungenförmigen oder nockenförmigen Verbindungselemente und/oder Kopplungselemente können daher bei einer Verschiebung der Verbindungsvorrichtung relativ zur Kabelbahn nach unten oder nach aussen in die Bahnöffnungen eingeführt werden.

Vorzugsweise weisen die Verbindungselemente und/oder die Kopplungselemente die Form von gerundeten Nocken oder Bügeln auf, die in die Kabelbahnöffnungen eingeschoben werden können. Da der Verbinderquerschnitt der Verbindungsvorrichtung nur wenig kleiner ist als der Querschnitt der Kabelbahnsegmente ist eine Elastizität der Verbindungselemente und/oder der Kopplungselemente und/oder des Verbinderbodens und/oder der Verbinderwände und/oder des Kabelbahnbodens und/oder der Kabelbahnwände erforderlich. Eine Elastizität dieser Teile kann durch das Einfügen von Schnitten, Sicken oder dergleichen, die entlang einer entsprechenden Biegelinie verlaufen erzielt werden.

Vorzugsweise weisen die Verbindungselemente ein elastisches erstes Verbinderteil und ein zum Eingriff in eine Kabelbahnöffnung vorgesehenes zweites Verbinderteil auf. Das erste Verbinderteil wird beim Verbindungsvorgang elastisch gebogen, bis das zweite Verbinderteil in eine zugehörige Kabelbahnöffnung eingreifen kann.

Ebenso weisen die Kopplungselemente vorzugsweise ein elastisches erstes Kopplungsteil und ein zum Eingriff in eine Kabelbahnöffnung vorgesehenes zweites Kopplungsteil auf. Das erste Kopplungsteil wird beim Verbindungsvorgang elastisch gebogen, bis das zweite Kopplungsteil in eine zugehörige Kabelbahnöffnung eingreifen kann.

Die Verbindungselemente und die Kopplungselemente können identisch oder unterschiedlich ausgebildet sein.

In vorzugsweisen Ausgestaltungen ist vorgesehen, dass mehrere der ersten und mehrere der zweiten Verbindungselemente und/oder mehrere der ersten und mehrere der zweiten Kopplungselemente senkrecht oder parallel zur Verbinderachse gegeneinander versetzt angeordnet sind. Durch diese Massnahme wird bewirkt, dass bei der Installation der Verbindungsvorrichtung durch lineare Verschiebung die Verbindungselemente und/oder die Kopplungselemente sequenziell in die Kabelbahnöffnungen eingreifen können und dadurch der nach der Verbindung verbleibende Abstand zwischen den Stirnseiten der Kabelbahnsegmente auf ein Minimum reduziert werden kann.

In weiteren vorzugsweisen Ausgestaltungen ist vorgesehen, dass der Verbinderboden und/oder die Verbinderwände mit Montageöffnungen versehen sind, die optional der Aufnahme von Arretierelementen oder Sicherungselementen dienen, wie Verbindungsschrauben, die mittels einer Schraubenmutter festgezogen werden.

In weiteren vorzugsweisen Ausgestaltungen sind der Verbinderboden und/oder die Verbinderwände an den einander gegenüberliegenden Enden entlang der Verbinderachse und gegebenenfalls auch an den Oberseiten der Verbinderwände mit in den Verbinderquerschnitt hinein gerundeten, gegebenenfalls wellenförmig Eingangsteilen versehen. An den Übergangsstellen innerhalb des Kabelbahnquerschnitts werden daher Kanten vermieden, an denen Kabel, Leitungen oder Rohre verletzt werden könnten.

In einer weiteren vorzugsweisen Ausgestaltungen ist vorgesehen, dass die Verbinderwände an den vom Verbinderboden abgewandten Enden mit je einem elastischen oder festen Abschlussteil versehen sind, das zur formschlüssigen Verbindung mit einem dazu korrespondierenden Wandabschluss der Kabelbahnsegmente ausgebildet ist. Die gegebenenfalls zylindrisch gerundeten Wandabschlüsse der Kabelbahnsegmente und die gegebenenfalls zylindrisch gerundeten Abschlussteile der Verbindungsvorrichtung weisen eine hohe Festigkeit auf. Falls die zueinander korrespondierenden Abschlussteile und Wandabschlüsse parallel oder senkrecht ineinander verschoben werden, erhöht sich die Festigkeit der Kabelbahn signifikant, gegebenenfalls um mehr als das Doppelte, wodurch grössere Stützabstände zwischen benachbarten Deckenstützen und Auslegern realisierbar sind. Die Abschlussteile können die Wandabschlüsse umschliessen oder können in die Wandabschlüsse eingeführt werden. Vorteilhaft ist wiederum, dass die Kabelbahnsegmente axial gegen die Verbindungsvorrichtung verschoben werden oder die Verbindungsvorrichtung von oben kraftvoll in die Endstücke der Kabelbahnsegmente eingesetzt werden kann. Sofern die Abschlussteile und die Wandabschlüsse koaxial ineinander verschoben werden, sind diese vorzugsweise fest oder starr ausgebildet. Ein elastisches Abschlussteil wird hingegen vorgesehen, falls dieses von oben über den Wandabschluss geführt und festgeklemmt wird. Vorzugsweise weist das Abschlussteil eine nach aussen gebogene Leiste auf, die den Vorgang der elastischen Biegung des Abschlussteils unterstützt.

In einer weiteren vorzugsweisen Ausgestaltungen ist vorgesehen, dass der Verbinderboden entlang der Verbinderachse eine geringere Länge aufweist als die Verbinderwände. Die Länge der Verbinderwände entlang der Verbinderachse ist vorzugsweise um einen Faktor in einem Bereich von 1.5 - 4 grösser als die Länge des Verbinderbodens. Vorzugsweise sind die Verbinderwände mit einem Abschlussteil versehen, welches formschlüssig und/oder kraftschlüssig mit dem Wandabschluss der Kabelbahnwände verbindbar sind. Bei dieser Ausgestaltung resultiert eine Verbindung und Überlappung der Kabelbahnwände durch die Verbinderwände über eine grössere Distanz, weshalb eine erhöhte Festigkeit gegen Durchbiegung erzielt wird und die resultierende Kabelbahn mit grösseren Stützabständen der Ausleger Deckenstützen montiert werden kann. Erfindungsgemäss wird daher das Teil der Verbindungsvorrichtung grösster dimensioniert, dass zur Stabilisierung der Kabelbahn mehr beiträgt.

Wenigstens eines der ersten und zweiten Kopplungselemente der Verbindungsvorrichtung ist vorzugsweise je auf einem Teil der Verbinderwände angeordnet, die den Verbinderboden auf die eine oder andere Seite überragen und die daher eine höhere Elastizität aufweisen. Diese Teile bilden daher eine Art Rastzunge, die bei der Montage der Verbindungsvorrichtung mit den Kopplungselementen nach innen verdrängt wird, sodass die Kopplungselemente beim Erreichen der zugeordneten Kabelbahnöffnungen nach aussen in diese einrasten können. Die Verbindungsvorrichtung kann daher erst dann wieder gelöst werden, wenn die zungenförmigen Teile der Verbinderwände zurückgebogen werden. Auf diese Weise können Rastverbindungen besonders vorteilhaft realisiert werden.

Zur Erleichterung der Montage der Verbindungsvorrichtung ist diese vorzugsweise mit Markierungen und/oder Fensteröffnungen versehen, die vorzugsweise entlang der Symmetrielinie der Verbindungsvorrichtung angeordnet sind. Die Markierungen erlauben es, die Verbindungsvorrichtung korrespondierend zu Markierungen oder Öffnungen der aneinander anstossenden Kabelbahnsegmente auszurichten. Durch die Fensteröffnungen kann die korrekte Positionierung der Verbindungsvorrichtung über der Stossstelle der Kabelbahnsegmente optisch überprüft werden.

Die Verbindungsvorrichtung ist vorzugsweise derart ausgebildet, dass deren Verbindungselemente in Öffnungen der Kabelbahn einrasten können. Nach dem Verbinden der Kabelbahnsegmente mittels Rastverbindungen können sich die Kabelbahnsegmente nicht mehr selbsttätig voneinander lösen, weshalb zum Lösen der Verbindungsvorrichtung vorzugsweise ein Werkzeug eingesetzt wird. Weiterhin weist die Verbindungsvorrichtung vorzugsweise keine Angriffsflächen auf, die Beschädigungen von eingelegten Kabel verursachen könnten. Um das Lösen der montierten Verbindungsvorrichtung zu erleichtern, sind daher vorzugsweise Werkzeugaufnahmen, wie Einformungen oder Ausnehmungen, versehen, in die ein Werkzeug eingreifen kann, um die Verbindungsvorrichtung aus der Verrastung zu lösen. Die Verbindungsvorrichtung kann daher nicht nur einfach montiert, sondern anhand eines Werkzeugs, wie eines Schraubendrehers, auch einfach demontiert werden.

In bevorzugten Ausgestaltungen sind die Kabelbahnwände und die Verbinderwände nach aussen in entgegengesetzte Richtungen geneigt. Die Verbinderwände sind vorzugsweise elastisch ausgebildet, elastisch drehbar und/oder elastisch deformierbar. Vorzugsweise ist der Neigungswinkel der elastischen Verbinderwände vorzugsweise um 5° - 15° grösser als der Neigungswinkel der Kabelbahnwände. Nach dem kraftvollen Einsetzen der Verbindungsvorrichtung liegen die Verbinderwände mit ihren Aussenseiten daher zumindest teilweise kraftschlüssig an den Innenseiten der Kabelbahnwände an, weshalb die Verbindungselemente und/oder Kopplungselemente in den zugeordneten Öffnungen der Kabelbahnsegmente sicher gehalten sind. Die Breite des Verbinderbodens entspricht vorzugsweise der Breite des Kabelbahnbodens entspricht, so dass der Kabelbahnquerschnitt nach dem Einsetzen der Verbindungsvorrichtung nur minimal reduziert ist.

Nachfolgend wird die Erfindung anhand von Zeichnungen näher erläutert. Dabei zeigt:
- Fig. 1: eine bekannte Kabelführungsvorrichtung 10' mit einer einteiligen Kabelbahn 1', die einen Kabelbahnboden 11 und beidseits daran anschliessende Seitenwände 12 aufweist und die auf Ausleger 2 abgelegt ist, die in einem Stützabstand a voneinander beanstandet von Halteprofilen 3 gehalten sind;
- Fig. 2: eine Kabelführungsvorrichtung 10 mit einer anhand eines erfindungsgemässen Kabelbahnsystems gefertigten erfindungsgemässen Kabelbahn 1, die zwei Kabelbahnsegmente 1A, 1B aufweist, die durch eine erfindungsgemässe Verbindungsvorrichtung 5 miteinander verbunden sind;
- Fig. 3: einen Teil eines der Kabelbahnsegmente 1A, 1B von Fig. 2 mit exemplarisch gezeigten Solltrennstellen, die entlang von Trennlinien T verlaufende Bodenperforationen 110 und Wandperforationen 120 aufweisen;
- Fig. 4a: ein erfindungsgemässes Kabelbahnsystem mit einer erfindungsgemässen Verbindungsvorrichtung 5, die einen Verbinderboden 511 und beidseits einstückig daran anschliessende und dazu geneigt ausgerichtete Verbinderwände 512 sowie ein erstes und ein zweites Verbindersegment 5A, 5B umfasst, die an einer virtuellen Symmetrielinie L einstückig miteinander verbunden sind, während des Einsetzens von oben senkrecht zur Kabelbahnachse x von zwei stirnseitig aneinander anstossenden Kabelbahnsegmenten 1A, 1B;
- Fig. 4b: die resultierende Kabelbahn 1 nach der Montage der Verbindungsvorrichtung 5 von Fig. 4a und der Verbindung des ersten Verbindersegments 5A mit dem ersten Kabelbahnsegment 1A und der Verbindung des zweiten Verbindersegments 5B mit dem zweiten Kabelbahnsegment 1B;
- Fig. 4c: die Verbindungsvorrichtung 5 von Fig. 4a, die mit einer Andruckkraft F von oben in den Kabelbahnquerschnitt der Kabelbahnsegmente 1A, 1B eingesetzt wird;
- Fig. 4d: die Kabelbahnsegmente 1A, 1B von Fig. 4b, die mittels der Verbindungsvorrichtung 5 miteinander verbunden sind, von der Seite;
- Fig. 5: eine vorzugsweise ausgestaltete Verbindungsvorrichtung 5 mit vier ersten und zweiten Verbindungselementen 5113A, 5113B am Verbinderboden 511 und vier ersten und zweiten Kopplungselementen 5123A, 5123B an den beiden Verbinderwänden 512;
- Fig. 6a: eine erfindungsgemässe Kabelbahn 1 mit zwei Kabelbahnsegmenten 1A, 1B gemäss Fig. 4a, die durch eine vorzugsweise ausgestaltete Verbindungsvorrichtung 5 miteinander verbunden sind;
- Fig. 6b: die Verbindungsvorrichtung 5 von Fig. 6a mit einem Teil des Kabelbahnsegments 1B;
- Fig. 6c: die Verbindungsvorrichtung 5 mit dem Teil des Kabelbahnsegments 1B von Fig. 6b um 180° gewendet;
- Fig. 7a: einen Teil der Kabelbahnwand 12 des Kabelbahnsegments 1A von Fig. 6a, das mit der zugeordneten Verbinderwand 512 der Verbindungsvorrichtung 5 verbunden ist, die Kopplungselemente 5123A, 5123B in einer ersten vorzugsweisen Ausgestaltung aufweist;
- Fig. 7b: einen Teil der Kabelbahnwand 12 des Kabelbahnsegments 1A von Fig. 6a, das mit der zugeordneten Verbinderwand 512 der Verbindungsvorrichtung 5 verbunden ist, die Kopplungselemente 5123A, 5123B in einer zweiten vorzugsweisen Ausgestaltung aufweist;
- Fig. 8a: eine erfindungsgemässe Kabelbahn 1 mit zwei Kabelbahnsegmenten 1A, 1B gemäss Fig. 3, die durch eine vorzugsweise ausgestaltete Verbindungsvorrichtung 5, die Fensteröffnungen 511F, 511f, 512F, Markierungen 5125M und Werkzeugaufnahmen 511W aufweist, miteinander verbunden sind; und
- Fig. 8b: die Verbindungsvorrichtung 5 von Fig. 8a.

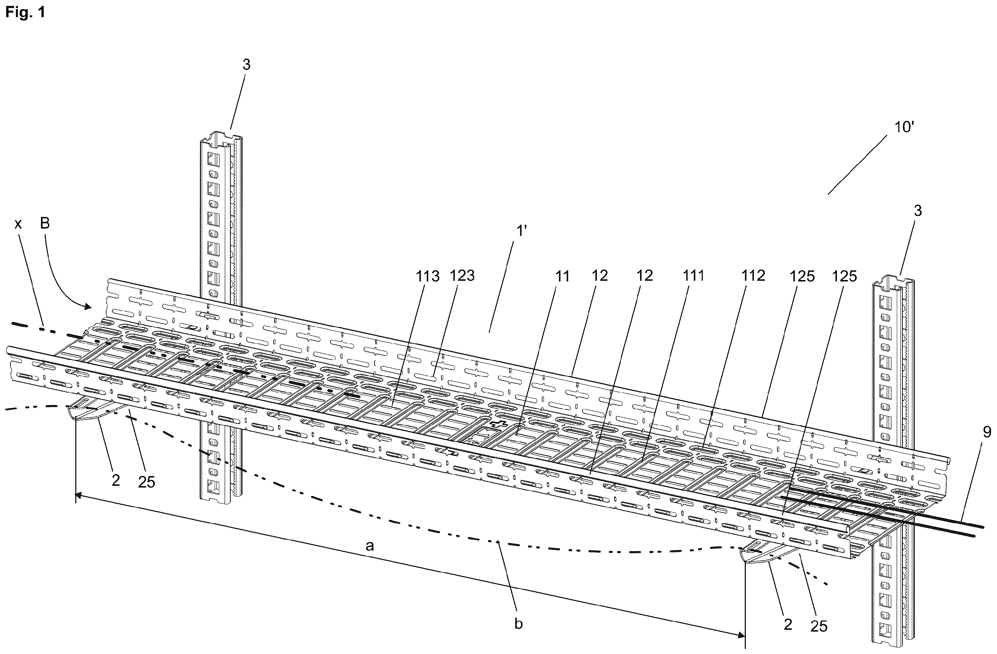

Fig. 1 zeigt eine Kabelführungsvorrichtung 10' mit einer einstückigen Kabelbahn 1', die auf Auslegern 2 ruht, die in einem Stützabstand a voneinander beanstandet von Halteprofilen 3 gehalten sind.

Die Kabelbahn 1 ist zur Aufnahme von Kabel, Leitungen und Rohren 9 vorgesehen, die ein erhebliches Gewicht aufweisen können. Der Stützabstand a zwischen den Auslegern 2 wird in Abhängigkeit der zu tragenden Last und der Festigkeit der Kabelbahn 1 gewählt.

Die Kabelbahn 1, die vorzugsweise aus Metall gefertigt ist und sich entlang einer Kabelbahnachse x erstreckt, umfasst einen Kabelbahnboden 11 und beidseits daran anschliessende Kabelbahnwände 12, die einen Kabelbahnquerschnitt B begrenzen. Die Kabelbahnwände 12 sind vorzugsweise in einem Bereich von 90° bis 105° gegenüber dem Kabelbahnboden 11 nach aussen geneigt. Damit die Kabelbahnen 1 stapelbar sind, ist üblicherweise eine Neigung von mehr als 90° vorgesehen, sodass die Kabelbahnwände 12 in entgegengesetzte Richtungen leicht nach aussen geneigt sind. Auf der vom Kabelbahnboden 11 abgewandten Seite weisen die Kabelbahnwände 12 in dieser vorzugsweisen Ausgestaltung einen gerundeten Wandabschluss 125 auf, der wesentlich zur Festigkeit der Kabelbahn 1' bei trägt. Zur Realisierung des Wandabschlusses 125 ist das Blech vorzugsweise zylindrisch nach aussen gerollt.

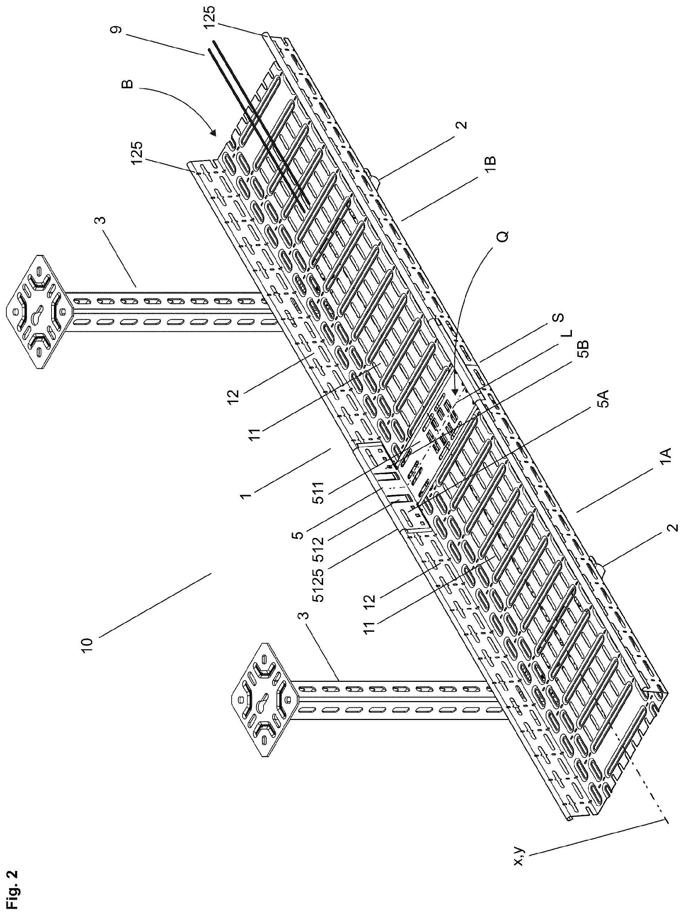

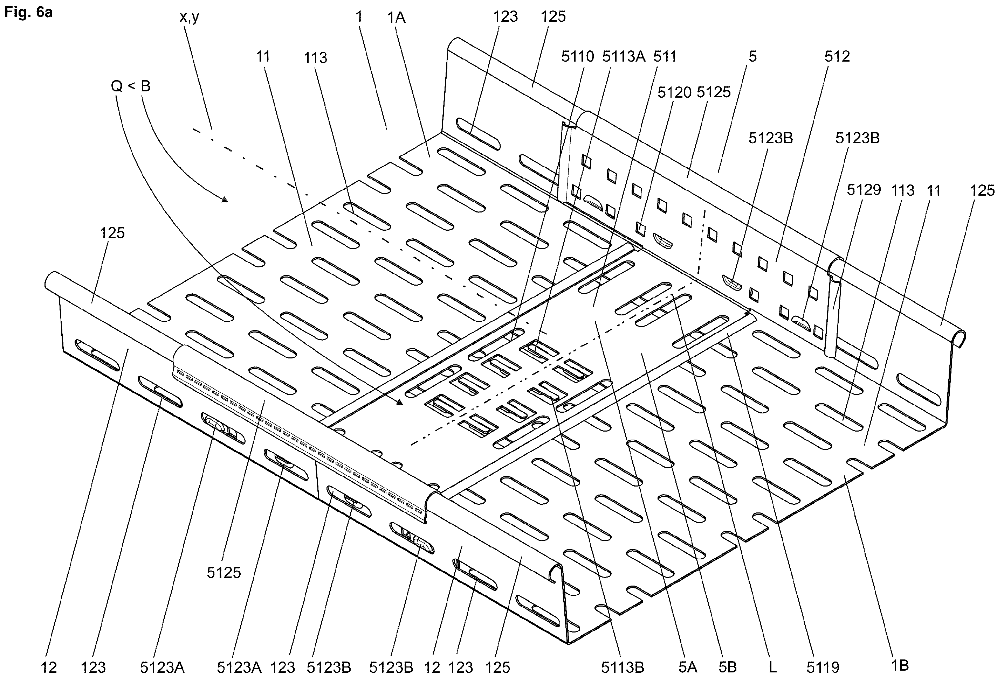

Im Kabelbahnboden 11 und in den Seitenwänden 12 sind Kabelbahnöffnungen 113, 123 vorgesehen, die eine Belüftung und Kühlung des eingelegten Kabelmaterials 9 erlauben und die für die Montage erfindungsgemässer Verbindungsvorrichtungen 5 (siehe Fig. 2) verwendet werden. Durch die Kabelbahnöffnungen 113 können ferner Verbindungsschrauben 81 hindurch geführt werden, um die Verbindungsvorrichtung 5 zu sichern (siehe Fig. 6a).

Durch die Einformung optionaler Transversalsicken 111 und optionaler Axialsicken 112 in den Kabelbahnboden 11 wurde dieser versteift.

Die Biegefestigkeit der Kabelbahn 1 entlang der Kabelbahnachse x wird im Wesentlichen durch die Festigkeit der Seitenwände 112 bestimmt. Die Biegefestigkeit der Kabelbahn 1 quer zur Kabelbahnachse x, welche im Wesentlichen die Biegefestigkeit des Kabelbahnbodens 11 betrifft, wird durch die Materialdicke des Kabelbahnbodens 11 und die vorzugsweise eingeformten Transversalsicken 111 und Axialsicken 112 bestimmt.

Mit einer strichpunktierten Biegelinie b ist die Durchbiegung der Kabelbahn 1 zwischen den Auslegern 2 unter Last illustriert. Die maximale mechanische Spannung in der Kabelbahn 1 resultiert in den Bereichen mit maximaler Durchbiegung zwischen den Stützpunkten oder Auslegern 2 und an den Stützpunkten oder Auslegern 2 selbst, falls die Kabelbahn 1 weitergeführt wird.

Bei der Verbindung von Kabelbahnsegmenten ist wesentlich, dass im Bereich der Verbindungsvorrichtung keine Reduktion der Biegefestigkeit auftritt und der geplante Stützabstand auch im Bereich einer Verbindungsvorrichtung eingehalten werden kann.

Fig. 2 zeigt eine Kabelführungsvorrichtung 10 mit einer erfindungsgemässen Kabelbahn 1 die auf Ausleger 2 abgestützt ist, die von Deckenstützen 3 gehalten sind. Die Kabelbahn 1 umfasst, zwei Kabelbahnsegmente 1A, 1B und eine Verbindungsvorrichtung 5 des erfindungsgemässen Kabelbahnsystems. Die Kabelbahnsegmente 1A, 1B liegen an einer Stossstelle S stirnseitig aneinander und sind durch Verbindungsvorrichtung 5, die von oben in den Kabelbahnquerschnitt B eingeführt wurde, miteinander verbunden.

Die Verbindungsvorrichtung 5, die einen Verbinderboden 511 und beidseits einstückig daran anschliessende Verbinderwände 512 umfasst, bildet ein U-Profil mit einem Verbinderquerschnitt Q und einer Verbinderachse y, die nach der Installation vorzugsweise koaxial zur Kabelbahnachse x verläuft.

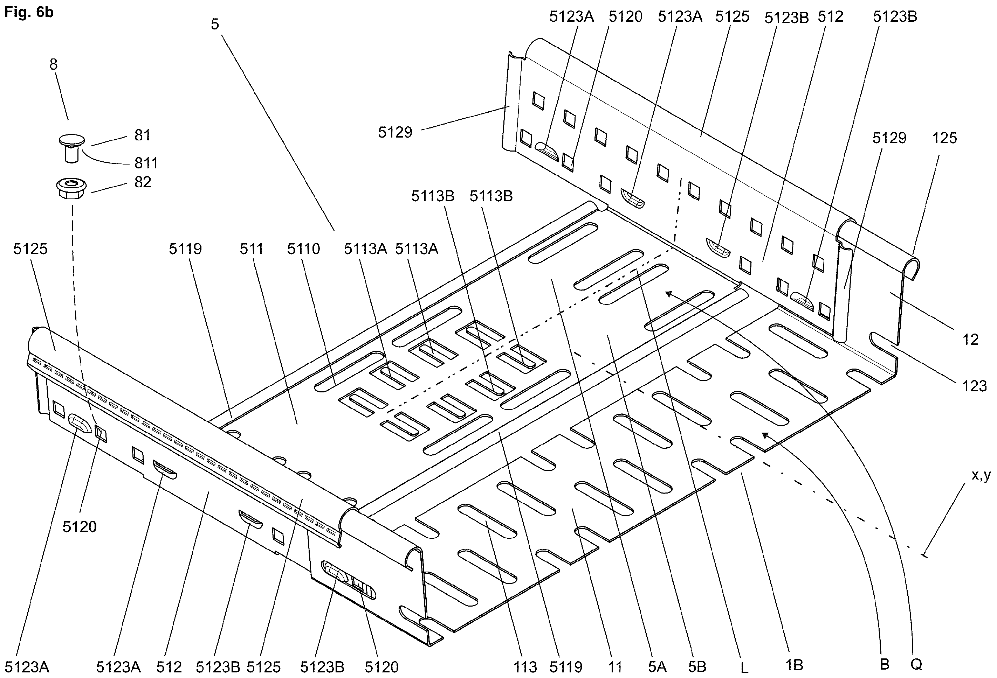

Der Verbinderboden 511 liegt am Kabelbahnboden 11 an und die Verbinderwände 512 liegen an den Kabelbahnwänden 12 an, weshalb der Verbinderquerschnitt Q der Verbindungsvorrichtung 5 (siehe Fig. 6b), zumindest annähernd entsprechend der Dicke des Verbinderbodens 511 und der Dicke der Verbinderwände 512, kleiner ist als der Kabelbahnquerschnitt B der Kabelbahn 1. Da die Verbinderwände 512 an den Kabelbahnwänden 12 anliegen, entspricht die Neigung der Verbinderwände 512 zum Verbinderboden 511 vorzugsweise der Neigung der Kabelbahnwände 12 zum Kabelbahnboden 11. Die Verbindungsvorrichtungen 5 können daher in gleicher Weise gestapelt werden, wie die Kabelbahnsegmente 1A, 1B oder können für den Transport auch in Kabelbahnsegmente 1A, 1B eingelegt werden.

In bevorzugten Ausgestaltungen ist die Verbindungsvorrichtung 5 federelastisch ausgebildet und die Neigung der Verbinderwände 512 grösser als die Neigung der Kabelbahnwände 12. Nach dem Einsetzen der Verbindungsvorrichtung 5 drücken die Verbinderwände 512 gegen die Kabelbahnwände 12, weshalb Verbindungselemente oder Kopplungselemente der Verbinderwände 512 kraftvoll innerhalb von Ausnehmungen der Kabelbahnwände 12 gehalten sind und sich nicht selbsttätig lösen können. Beim Einsetzen der Verbindungsvorrichtung 5 in die Kabelbahnsegmente 1A, 1B werden die Verbinderwände 512 zurückgebogen und gegen die Kabelbahnwände 12 angedrückt. Bei diesem Vorgang können an den Verbinderwänden 512 vorgesehene Verbindungselemente oder Kopplungselemente, die vorzugsweise ebenfalls elastisch gehalten oder ausgebildet sind, in Öffnungen der Kabelbahnwände 12 einrasten.

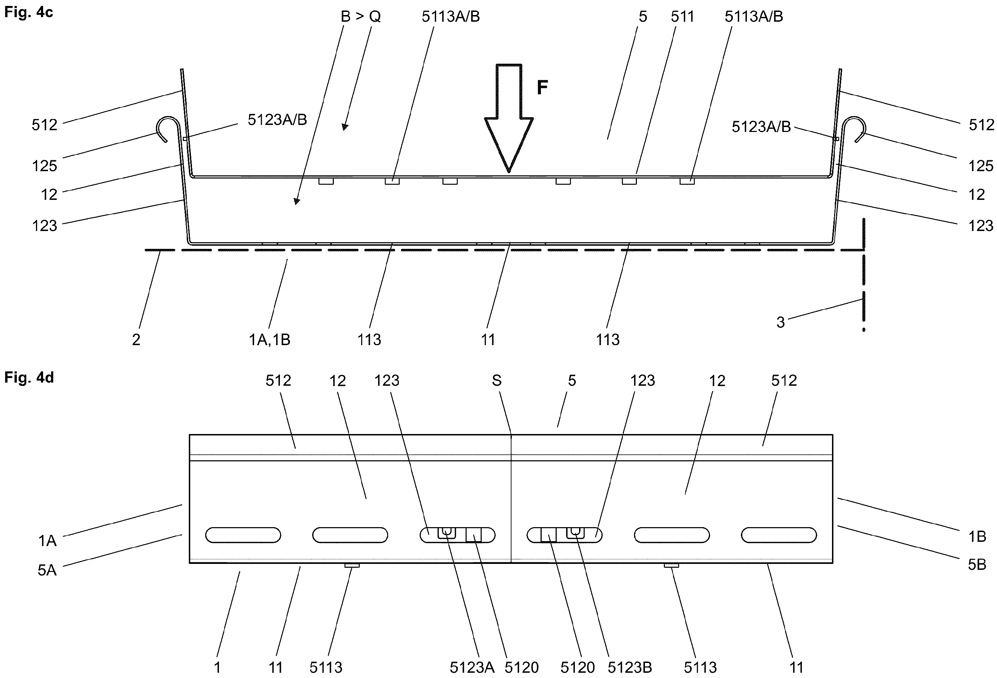

Unabhängig von der konkreten Ausgestaltung der Verbindungsvorrichtung 5 ist besonders vorteilhaft, dass bei der Installation der Verbindungsvorrichtung 5 diese mit einer vergleichsweise hohen Andruckkraft F von oben gegen die Kabelbahnsegmente 1A, 1B geführt werden kann, die an der Unterseite durch Ausleger 2 gehalten sind und daher nicht entweichen können. Besonders ideal ist, wenn die Stossstelle S der Kabelbahnsegmente 1A, 1B direkt über einem Ausleger 2 liegt (siehe Fig. 4c).

Eine Verbindungsvorrichtung gemäss dem Stand der Technik, die von unten gegen die Endstücke der Kabelbahnsegmente geführt wird, kann hingegen nicht mit der gleichen Kraft gegen die Endstücke der Kabelbahnsegmente geführt werden, weil diese nach oben angehoben entweichen können. Sofern die Stossstelle der Kabelbahnsegmente direkt über einem Ausleger liegt, was bei der erfindungsgemässen Lösung besonders vorteilhaft ist, kann die Verbindungsvorrichtung von unten gar nicht gegen die Endstücke der Kabelbahnsegmente geführt werden. Stattdessen müssen die Kabelbahnsegmente angehoben, die Verbindungsvorrichtung auf den Ausleger abgelegt und die Endstücke der Kabelbahnsegmente in die Verbindungsvorrichtung eingedrückt werden, was mit hohen Geschwindigkeiten verbunden ist.

Die Verbinderwände 512 sind an den vom Verbinderboden 511 abgewandten Enden vorzugsweise mit Abschlussteilen 5125 versehen, die den Wandabschluss 125 vorzugsweise spielfrei umschliessen und die vorzugsweise ebenfalls zylindrisch ausgebildet sind.

Die Verbindungsvorrichtung 5 ist bezüglich einer Symmetrielinie L in ein erstes Verbindersegment 5A, das mit dem ersten Kabelbahnsegment 1A verbunden ist, und in ein zweites Verbindersegment 5B, das mit dem zweiten Kabelbahnsegment 1B verbunden ist, unterteilt.

Fig. 2 zeigt, dass die Verbindungsvorrichtung 5, die vorzugsweise einstückig ausgebildet und aus einem Blechstück ausgeschnitten und geformt ist, praktisch einen integralen Bestandteil der Kabelbahn 1 und einen nahtlosen Übergang zwischen den Kabelbahnsegmente 1A, 1B bildet, der die Stossstelle S vollständig überdeckt. Die Endbereichen der Verbindungsvorrichtung 5 weisen eine Wellenform auf einen hindernisfreien Übergang zwischen den Kabelbahnsegmenten 1A, 1B und der Verbindungsvorrichtung. Obwohl die Verbindungsvorrichtung 5 in die Kabelbahn 1 eingesetzt ist, resultieren keine störenden mechanischen Hindernisse innerhalb der Kabelbahn 1. Da die Verbindungsvorrichtung 5 in die Kabelbahn 1 eingesetzt ist, tritt diese auch optisch nicht störend in Erscheinung. Die Seitenwände 12 und das Bodenelement 11 werden von aussen nicht von der Verbindungsvorrichtung 5 überlappt. Es resultiert ein optimaler ästhetischer Eindruck.

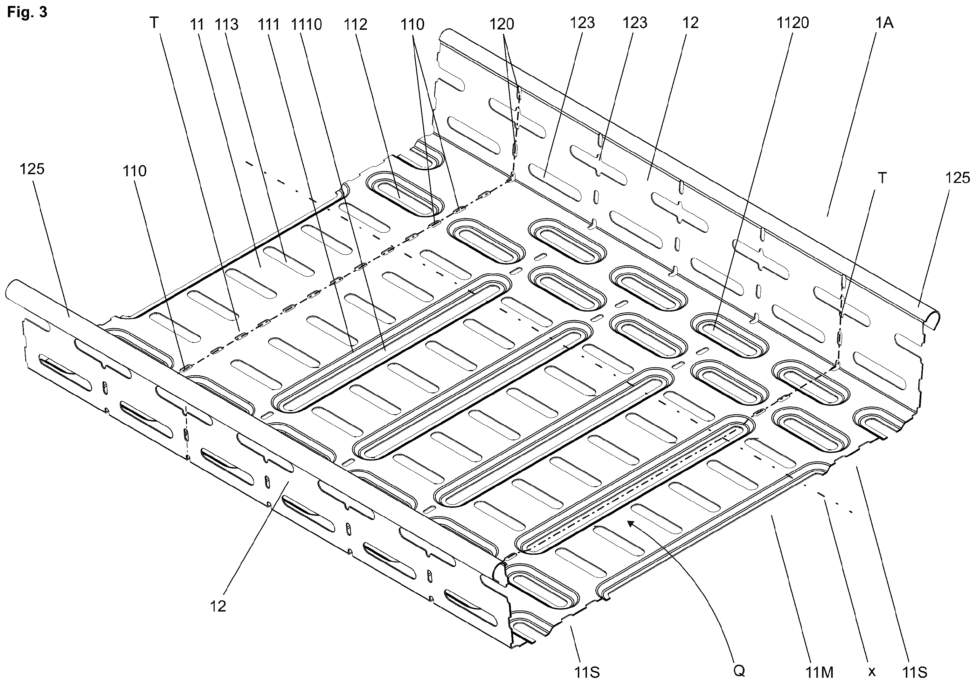

Fig. 3 zeigt einen Teil eines der Kabelbahnsegmente 1A, 1B von Fig. 2, deren Kabelbahnboden 11 einen zwischen zwei Seitenbereichen 11S liegenden Mittelbereich 11M aufweist.

Im Kabelbahnboden 11 sind Bodenperforationen 110 und in den Seitenwänden 12 sind Wandperforationen 120 vorgesehen, die je entlang einer Trennlinie T senkrecht zur Kabelbahnachse x verlaufen und eine Solltrennstelle bilden. Durch strichpunktierte Trennlinien T sind zwei Ausführungsbeispiele von Sollbruchstellen markiert.

In einer ersten vorzugsweisen Ausgestaltung ist eine Trennlinie T, die auf der linken Seite gezeigt ist, im Wesentlichen durch Bodenperforationen 110 und Wandperforationen 120 definiert, die in einer Ebene senkrecht zur Kanalachse x verlaufen und die eine Solltrennstelle bilden, die mittels eines Trennwerkzeugs, wie einer Trennscheibe oder einer Blechschere, relativ einfach aufgetrennt werden kann.

Die Bodenperforationen 110 und die Wandperforationen 120 sind relativ schmale Längslochungen oder Längsschlitze, welche die Festigkeit der Kabelbahn 1 kaum reduzieren.

In einer zweiten vorzugsweisen Ausgestaltung ist eine Trennlinie T, die auf der rechten Seite gezeigt ist, im Wesentlichen durch Bodenperforationen 110, Wandperforationen 120 und eine Transversalsicke 111 definiert, die in einer Ebene senkrecht zur Kanalachse x verlaufen und eine Solltrennstelle bilden.

Die in der zweiten bevorzugten Ausgestaltung vorzugsweise im Mittelbereich 11M vorgesehenen Transversalsicken 111 sind in den Kabelbahnboden 11 eingeformt und verjüngen sich nach unten gegen die Aussenseite zu einem Transversalschlitz 1110, der eine durchgehende Schlitzöffnung bildet.

Die Bodenperforationen und die Wandperforationen bilden eine leicht erkennbare Markierung, weshalb eine Trennstelle nicht mehr manuell zu markieren ist. Da die Trennlinie T in einer Ebene senkrecht zur Kanalachse x verläuft, kann ein Kabelbahnsegment präzise rechtwinklig zur Kanalachse x abgetrennt werden.

Die Trennlinien T oder Sollbruchstellen sind an definierten Positionen mit einem definierten Abstand zu den Kabelbahnöffnungen 113, 123 angeordnet, welcher entsprechend der Ausgestaltung der Verbindungsvorrichtung 5 gewählt ist. Sofern die Kabelbahnsegmente 1A, 1B stets an einer der Trennlinien T aufgetrennt werden, resultiert stets ein an die Verbindungsvorrichtung 5 optimal angepasstes neues Kabelbahnsegment 1A, 1B, welches einem von mehreren Kabelbahnsegmenten eines Sortiments von Kabelbahnsegmenten entspricht, die von einem Hersteller in einheitlichen Grössen geliefert werden. Auf die Fabrikation, Lagerung und Lieferung solcher Kabelbahnsegmente mit einheitlichen Grössen kann durch Verwendung und Konfektion erfindungsgemässer Kabelbahnsegmente verzichtet werden, was zu einer erheblichen Reduktion des gesamten Installationsaufwands führt.

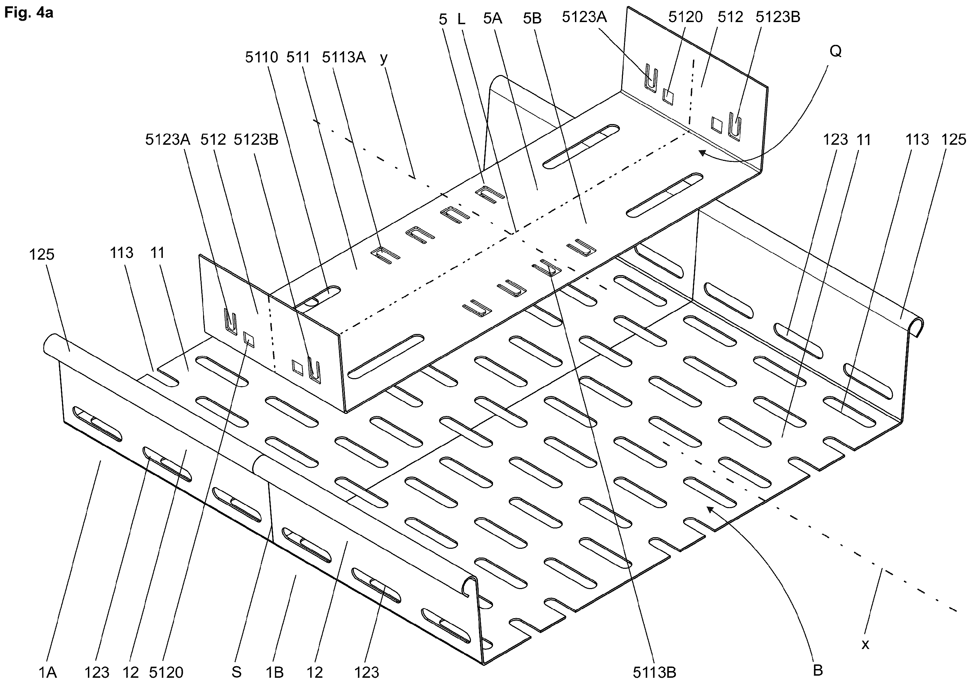

Fig. 4a zeigt ein erfindungsgemässes Kabelbahnsystem mit einer Verbindungsvorrichtung 5, die von oben senkrecht zur Kabelbahnachse x in zwei an einer Stossstelle S stirnseitig aneinander anstossenden Kabelbahnsegmente 1A, 1B eingesetzt wird. Die Kabelbahnsegmente 1A, 1B, die lediglich Kabelbahnöffnungen 113, 123 im Kabelbahnboden 11 und in den Kabelbahnwänden 12 sowie Wandabschlüsse 125 aufweisen, sind einfacher ausgestaltet als die Kabelbahnsegmente von Fig. 2.

Die einstückig ausgebildete Verbindungsvorrichtung 5 umfasst wiederum einen Verbinderboden 511 und beidseits einstückig daran anschliessende und dazu geneigt ausgerichtete Verbinderwände 512, sowie ein erstes und ein zweites Verbindersegment 5A, 5B, die an einer virtuellen Symmetrielinie L einstückig miteinander verbunden und in entgegengesetzte Richtungen parallel zur Verbinderachse y ausgerichtet sind. Die Verbindungsvorrichtung 5 bildet wiederum ein U-Profil mit einem Verbinderquerschnitt Q und mit einer Verbinderachse y, die nach der Installation vorzugsweise koaxial zur Kabelbahnachse x verläuft. Die Verbinderwände 512 weisen in dieser Ausgestaltung hingegen keine Abschlussteile 5125 auf. Der Verbinderquerschnitt Q ist wiederum geringer als der Kabelbahnquerschnitt **B.**

Die Neigung der Verbinderwände 512 kann der Neigung der Kabelbahnwände 12 entsprechen, ist vorzugsweise aber etwas grösser, sodass die Verbinderwände 512 nach der Installation an die Kabelbahnwände 12 andrücken.

Im ersten Verbindersegment 5A des Verbinderbodens 511 sind zungenförmige Verbindungselemente 5113A derart ausgeschnitten, dass sie nach aussen gegen das erste Kabelbahnsegment 1A gerichtet sind.

Im ersten Verbindungselement 5A der Verbinderwände 512 sind zungenförmige Kopplungselemente 5123A derart ausgeschnitten, dass sie nach unten gegen den Verbinderboden 511 gerichtet sind.

Im zweiten Verbindersegment 5B des Verbinderbodens 5 sind zungenförmige Verbindungselemente 5113B derart ausgeschnitten, dass sie nach aussen gegen das zweite Kabelbahnsegment 1B gerichtet sind.

Im zweiten Verbindungselement 5B der Verbinderwände 512 sind zungenförmige Kopplungselemente 5123B derart ausgeschnitten, dass sie nach unten gegen den Verbinderboden 511 gerichtet sind.

Die Verbindungselemente 5113A, 5113B und/oder die Kopplungselemente 5123A, 5123B sind vorzugsweise elastisch ausgebildet und können vorzugsweise elastisch in Kabelbahnöffnungen 113, 123 einrasten oder in diese hineingedreht werden. Vorzugsweise sind die Verbindungselemente 5113A, 5113B und/oder die Kopplungselemente 5123A, 5123B mit Rastelementen oder Halteelementen versehen.

Die Kabelbahnsegmente 1A, 1B können daher in einfacher Weise miteinander verbunden werden, indem sie stirnseitig gegeneinander geschoben werden, und die Verbindungsvorrichtung 5 anschliessend von oben in den Kabelbahnquerschnitt B der Kabelbahnsegmente 1A, 1B eingeschoben wird, bis die Verbindungselemente 5113A, 5113B und/oder die Kopplungselemente 5123A, 5123B einrasten.

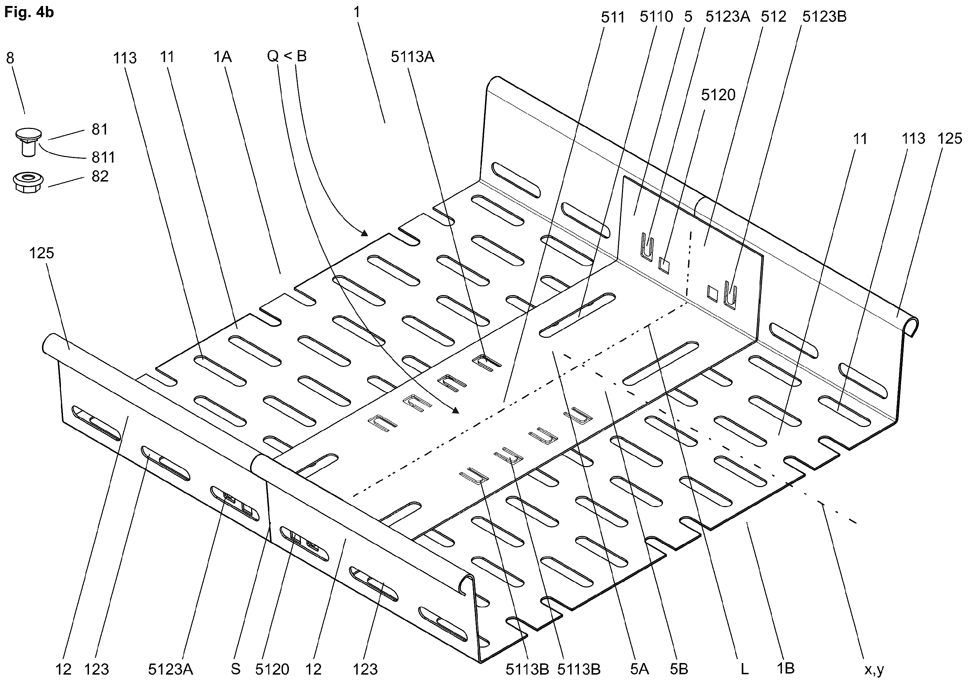

Der Verbinderboden 511 und die Verbinderwände 512 sind zudem mit Montageöffnungen 5110, 5120 versehen, die der Aufnahme von Verbindungsmitteln oder Sicherungsmitteln 8 dienen (siehe Fig. 4b), mittels denen die eingesetzte Verbindungsvorrichtung 5 optional gesichert werden kann.

Fig. 4b zeigt die resultierende Kabelbahn 1 nach der Montage der Verbindungsvorrichtung 5 von Fig. 4a und der Verbindung des ersten Verbindersegments 5A mit dem ersten Kabelbahnsegment 1A und der Verbindung des zweiten Verbindersegments 5B mit dem zweiten Kabelbahnsegment 1B. Die ersten und zweiten Verbindungselemente 5113A, 5113B und die ersten und zweiten Kopplungselemente 5123A, 5123B greifen in die zugehörigen Kabelbahnöffnungen 113, 123 ein und sind im Verbinderboden 511 und in den Verbinderwänden 512 verankert.

In vorzugsweisen Ausgestaltungen der Verbindungsvorrichtung 5 werden die ersten und zweiten Kopplungselemente 5123A, 5123B in den Seitenwänden 512 verankert. Durch die Verankerung der ersten und zweiten Verbindungselemente 5113A, 5113B im Verbinderboden 511, sofern diese vorhanden sind, erfolgt in diesem Fall optional eine zusätzliche Sicherung.

Alternativ werden die ersten und zweiten Verbindungselemente 5113A, 5113B im Verbinderboden 511 verankert. Durch die Verankerung der ersten und zweiten Kopplungselemente 5123A, 5123B in den Verbinderwänden 512, sofern diese vorhanden sind, erfolgt in diesem Fall optional eine zusätzliche Sicherung.

In weiteren vorzugsweisen Ausgestaltungen dienen die Verbindungselemente 5113A, 5113B und die Kopplungselemente 5123A, 5123B beide der Verankerung und der Sicherung.

Es ist zu beachten, dass die ersten und zweiten Verbindungselemente 5113A, 5113B und die ersten und zweiten Kopplungselemente 5123A, 5123B auf der Höhe der zugeordneten Kabelbahnöffnungen 113, 123 angeordnet sind und somit senkrecht zur Verbinderachse y einen Rasterabstand aufweisen, der dem Rasterabstand der Kabelbahnöffnungen 113, 123 senkrecht zur Kabelbahnachse x entspricht. Der Kabelbahnboden 11 und die Kabelbahnwände 12 weisen nebeneinander oder übereinander vorzugsweise mehrere Reihen von Kabelbahnöffnungen 113, 123 auf. Die Anzahl der ersten und zweiten Verbindungselemente 5113A, 5113B und der ersten und zweiten Kopplungselemente 5123A, 5123B wird vorzugsweise entsprechend gewählt.

Die Kabelbahnöffnungen 113, 123 sind als Langlöcher ausgebildet, die parallel zur Kabelbahnachse X ausgerichtet sind.

Die Montageöffnungen 5120 sind vorzugsweise neben den ersten und zweiten Kopplungselementen 5123A, 5123B angeordnet, sodass Verbindungsmittel 8 in dieselbe Kabelbahnöffnungen 123 eingreifen können, wie die Kopplungselemente 5123A, 5123B. Exemplarisch ist eine Verbindungsgarnitur 8 mit einer Verbindungsschraube 81 und einer Schraubenmutter 82 gezeigt. Die Verbindungsschraube 81 weist anschliessend an den Schraubenkopf ein Vierkantelement 811 auf, das nicht drehbar in einer vorzugsweise quadratischen Montageöffnung 5120 gehalten ist. Die Schraubenmutter 82 kann daher in einfacher Weise festgezogen werden, ohne dass die Verbindungsschraube 81 gehalten werden muss.

Fig. 4c zeigt die Verbindungsvorrichtung 5 und die Kabelbahnsegmente 1A, 1B von Fig. 4a von der Frontseite. Die ersten und zweiten Verbindungselemente 5113A, 5113B und die ersten und zweiten Kopplungselemente 5123A, 5123B liegen in einer Richtung parallel zur Kabelbahnachse x hintereinander. Aufgrund der Neigung der Kabelbahnwände 12 können die ersten und zweiten Kopplungselemente 5123A, 5123B in den Querschnitt der Kabelbahnsegmente 1A, 1B eingeführt werden, bis sie verdrängt werden und anschliessend in Kabelbahnöffnungen 123 in den Seitenwänden 512 eintreten können und dort verankert werden. Bei diesem Vorgang werden auch die ersten und zweiten Verbindungselemente 5113A, 5113B in den Kabelbahnboden 11 eingeführt und dort verankert. Beispielsweise halten die ersten und zweiten Verbindungselemente 5113A, 5113B die beiden Kabelbahnsegmente 1A, 1B an der Stossstelle S zusammen, während die ersten und zweiten Kopplungselemente 5123A, 5123B verhindern, dass sich die ersten und zweiten Verbindungselemente 5113A, 5113B wieder lösen können.

Fig. 4c zeigt ferner, dass bei der Installation die Verbindungsvorrichtung 5 mit einer vergleichsweise hohen Andruckkraft F von oben gegen die Kabelbahnsegmente 1A, 1B geführt werden kann, die an der Unterseite durch Ausleger 2 gehalten sind und daher nicht entweichen können. Besonders ideal ist, wenn die Stossstelle S der Kabelbahnsegmente 1A, 1B direkt über einem Ausleger 2 liegt. Diese Tatsache ist besonders relevant, wenn die Verbindungsvorrichtung 5 Abschlussteile 5125 aufweist, welche die Wandabschlüsse 125 der Kabelbahnsegmente 1A, 1B nach der Installation elastisch umschliessen und halten.

Fig. 4d zeigt die installierte Verbindungsvorrichtung 5 und die miteinander verbundenen Kabelbahnsegmente 1A, 1B von Fig. 4b von der Seite. Es ist ersichtlich, dass die Verbindungselemente 5113A, 5113B und die Kopplungselemente 5123A, 5123B nicht in den Kabelbahnquerschnitt hineinragen, sondern nach aussen geführt sind.

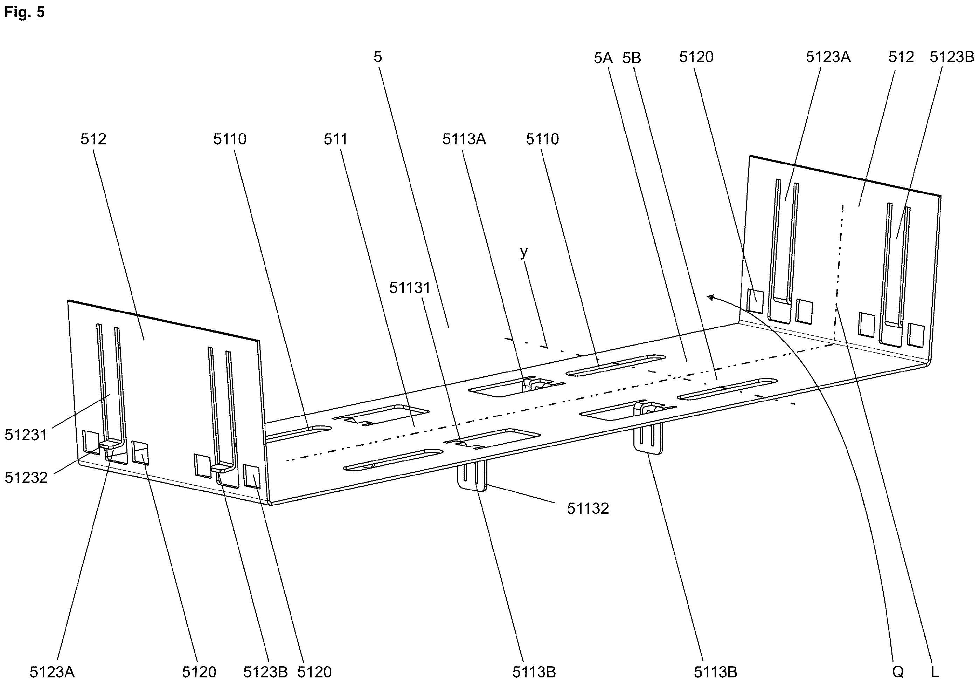

Fig. 5 zeigt eine vorzugsweise ausgestaltete Verbindungsvorrichtung 5 mit zwei ersten Verbindungselementen 113A und zwei ersten Kopplungselementen 5123A am Verbinderboden 511 und den Verbinderwänden 512 des ersten Verbindersegments 5A und mit zwei zweiten Verbindungselementen 113B und zwei zweiten Kopplungselementen 5123B am Verbinderboden 511 und den Verbinderwänden 512 des zweiten Verbindersegments 5B. Die Verbindungselemente 5113A, 5113B und die Kopplungselemente 5213A, 5213B weisen je ein erstes vorzugsweise elastisches Verbindungsteil 51131, 51231 und ein zweites Verbindungsteil 51132, 51232 auf, dass für den Eingriff in eine zugehörige Kabelbahnöffnung 113, 123 vorgesehen ist.

Die zweiten Verbindungsteile 51132, 51232 ragen nach aussen, weshalb diese Verbindungsvorrichtung 5 in den Querschnitt der Kabelbahnsegmente 1A, 1B beispielsweise von Fig. 4a eingesetzt werden kann und die Verbindungselemente 5113A, 5113B und die Kopplungselemente 5213A, 5213B nach aussen in den Kabelbahnboden 11 und die Kabelbahnwände 12 eingreifen.

In dieser Ausgestaltung der Verbindungsvorrichtung 5 weisen die Kopplungselemente 5213A, 5213B eine besonders hohe Elastizität auf, sodass sie leicht zurückgebogen werden können, bevor sie einrasten.

Die Verbindungsvorrichtung 5 ist symmetrisch zu einer Symmetrielinie L und symmetrisch zur Verbinderachse y und somit punktsymmetrisch zum Schnittpunkt der Symmetrielinie L und der Verbinderachse y ausgebildet.

Fig. 6a zeigt eine erfindungsgemässe Kabelbahn 1 mit zwei Kabelbahnsegmenten 1A, 1B gemäss Fig. 4a, die durch eine vorzugsweise ausgestaltete Verbindungsvorrichtung 5 miteinander verbunden sind. Die Verbindungsvorrichtung 5 ist weitgehend identisch zur Verbindungsvorrichtung 5 von Fig. 2, weshalb wahlweise Kabelbahnsegmente 1A, 1B gemäss Fig. 2 oder Kabelbahnsegmente 1A, 1B gemäss Fig. 4a durch die Verbindungsvorrichtung 5 miteinander verbindbar sind.

Ein wesentlicher Unterschied zwischen der Verbindungsvorrichtung 5 von Fig. 4a und der Verbindungsvorrichtung 5 von Fig. 6a besteht darin, dass die Verbindungsvorrichtung 5 von Fig. 6a und die entsprechend dazu ausgerichteten Kabelbahnsegmente 1A, 1B bei der Installation parallel zur Kabelbahnachse x und zur Verbinderachse y gegeneinander verschoben werden. Die Verbindungselemente 5113A, 5113B und die Kopplungselemente 5213A, 5213B dieser Verbindungsvorrichtung 5 sind entsprechend an diesen Installationsvorgang anzupassen, sodass deren Einrasten oder deren Verbindung bei einer axialen Verschiebung der Verbindungsvorrichtung 5 gelingt.

Bei dieser Ausgestaltung der Verbindungsvorrichtung 5 ist notwendig, dass entweder die Verbindungselemente 5113A, 5113B und die Kopplungselemente 5213A, 5213B über eine genügende Elastizität verfügen müssen, damit die Verbindungselemente 5113A, 5113B und die Kopplungselemente 5213A, 5213B bis zu den entsprechenden Kabelbahnöffnungen 113, 123 verschiebbar sind und einrasten können.

Die einstückig ausgebildete Verbindungsvorrichtung 5 umfasst wiederum einen Verbinderboden 511 und beidseits einstückig daran anschliessende und dazu geneigt ausgerichtete Verbinderwände 512, sowie ein erstes und ein zweites Verbindersegment 5A, 5B, die an einer virtuellen Symmetrielinie L einstückig miteinander verbunden sind. Die Verbindungsvorrichtung 5 bildet wiederum ein U-Profil mit einer Verbinderachse y, die nach der Installation koaxial zur Kabelbahnachse x verläuft. Die Verbinderwände 512 weisen in dieser Ausgestaltung Abschlussteile 5125 auf, welche die Wandabschlüsse 125 der Kanalwände 12 formschlüssig umgreifen. Bei der axialen Verschiebung der Kabelbahnsegmente 1A, 1B werden die zylindrischen Wandabschlüsse 125 der Kabelbahnsegmente 1A, 1B in die zylindrischen Abschlussteile 5125 der Verbindungsvorrichtung 5 eingeschoben. Bei dieser Ausgestaltung der Verbindungsvorrichtung 5 kann auf die Wandabschlüsse 125 hingegen auch verzichtet werden.

Die Abschlussteile 5125 können bei allen beschriebenen Verbindungsvorrichtungen 5 eingesetzt werden und bei der Installation parallel oder von oben senkrecht zu den Wandabschlüssen 125 der Kabelbahnsegmente 1A, 1B verschoben werden. Sofern die Abschlussteile 5125 von oben gegen die Wandabschlüsse 125 geführt werden, so werden die Abschlussteile 5125 gespreizt, bis sie die Wandabschlüsse 125 formschlüssig und kraftschlüssig umschliessen.

Fig. 6b zeigt die Verbindungsvorrichtung 5 von Fig. 6a mit einem Teil des Kabelbahnsegments 1B in vergrösserter Darstellung.

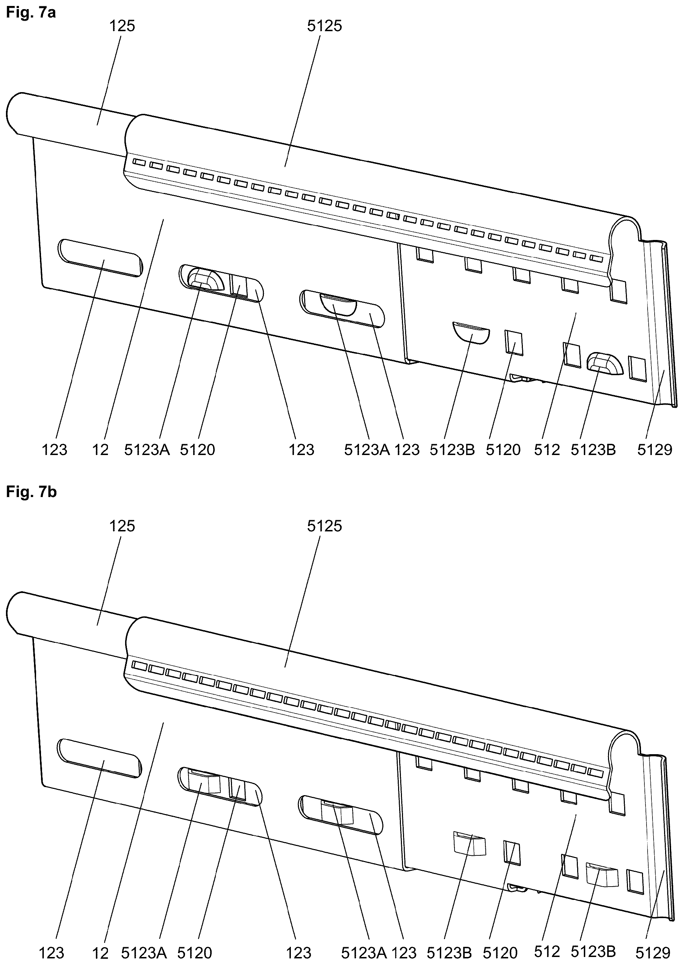

In dieser Ausgestaltung der Verbindungsvorrichtung 5 sind die ersten und zweiten Kopplungselemente 5123A, 5123B als nach aussen gerichtete Nocken ausgebildet, wie dies mit Bezug zu Fig. 7a noch näher erläutert wird.

Die ersten und zweiten Verbindungselemente 5113A, 5113B sind wiederum, beispielsweise wie die Kopplungselemente 5123A, 5123B von Fig. 5, zungenförmig ausgebildet und erstrecken sich in parallel zur Verbinderachse y gegen das zugehörige Kabelbahnsegment 1A, 1B.

Die ersten und zweiten Verbindungselemente 5113A, 5113B sind parallel zur Verbinderachse y gegeneinander versetzt angeordnet. Die gegenseitige Verschiebung kann der gegenseitigen Verschiebung der Kabelbahnöffnungen 113 entsprechen. Alternativ kann auch vorgesehen sein, dass die Verbindungselemente 5113A, 5113B derart gegeneinander versetzt sind, dass einige der Verbindungselemente 5113A, 5113B bereits in zugehörige Kabelbahnöffnungen 113 einrasten können, bevor andere der Verbindungselemente 5113A, 5113B in zugehörige Kabelbahnöffnungen 113 einrasten. Die letzten Verbindungselemente 5113A, 5113B, die in die Kabelbahnöffnungen 113 einrasten, halten das zugeordnete Kabelbahnsegment 1A, 1B jeweils nahe oder unmittelbar anstossend an der Stossstelle S.

In dieser vorzugsweisen Ausgestaltung sind der Verbinderboden 511 und die Verbinderwände 512 an den einander gegenüberliegenden Enden entlang der Verbinderachse y mit Eingangsteilen 5119, 5129 versehen, die in den Verbinderquerschnitt Q hinein gerundet oder wellenförmig ausgebildet sind, weshalb störende oder schädliche Kanten an den Eingängen der Verbindungsvorrichtung 5 vermieden werden. Kabel, Leitungen und Rohre 9 können daher von der einen oder anderen Seite in die Verbindungsvorrichtung 5 hineingezogen werden, ohne dass Beschädigungen beispielsweise eines Kabelmantels oder einer Kabelisolierung auftreten.

In dieser vorzugsweisen Ausgestaltung ist ferner vorgesehen, dass der Verbinderboden 511 entlang der Verbinderachse y eine geringere Länge aufweist als die Verbinderwände 512, die etwa doppelt so lang sind wie der Verbinderboden 511. Je eines der ersten und zweiten Kopplungselemente 5123A, 5123B ist auf den Teilen der Verbinderwände 512 angeordnet, welche den Verbinderboden 511 auf die eine oder andere Seite überragen und eine Art Rastzunge bilden. Aufgrund der Flexibilität der freiliegenden Endstücke der Verbinderwände 512 können diese Kopplungselemente 5123A, 5123B daher besonders einfach in die Kabelbahnöffnungen 123 eingeführt werden.

Fig. 6b zeigt, dass die Montage der Verbindungsvorrichtung 5 auch sequenziell erfolgen kann, indem die Verbindungsvorrichtung 5 zuerst mit einem der Kabelbahnsegmente 1B verbunden wird. Die Kabelbahnsegmente 1A, 1B können daher bereits vor der Installation, beispielsweise nach dem Zuschneiden, am Boden für die Installation vorbereitet und dazu einseitig oder beidseitig mit einer Verbindungsvorrichtung 5 ausgerüstet werden. Nach diesem Vorgang entsprechen die vorbereiteten Kabelbahnsegmente 1A, 1B den eingangs beschriebenen Kabelbahnsegmenten, die mit einer integrierten Verbindungsvorrichtung geliefert werden.

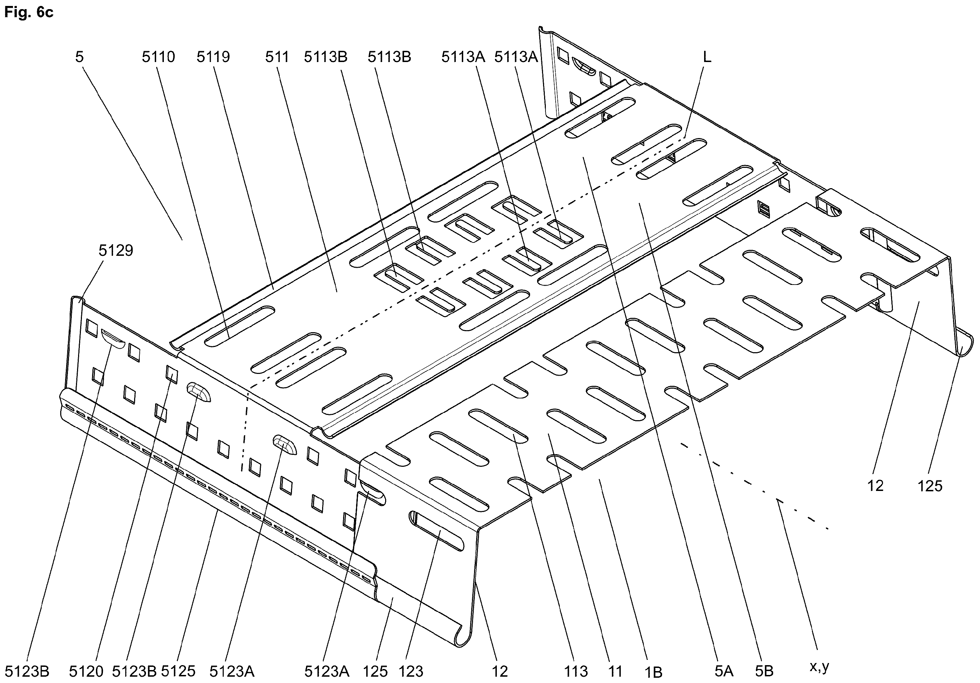

Fig. 6c zeigt die Verbindungsvorrichtung 5 von Fig. 6b um 180° gewendet.

Fig. 7a zeigt einen Teil der Kabelbahnwand 12 des Kabelbahnsegments 1A von Fig. 6a, das mit der zugeordneten Verbinderwand 512 der Verbindungsvorrichtung 5 verbunden ist, die Kopplungselemente 5123A, 5123B in einer ersten vorzugsweisen Ausgestaltung aufweist. Die Kopplungselemente 5123A, 5123B sind als Nocken ausgebildet und wurden in einfacher Weise durch einen Schnitt entsprechender Länge in den Seitenwänden 512 und das Ausprägen eines angrenzenden Blechteils realisiert werden. Die Nocken 5123A, 5123B sind in Bezug zur Verbinderachse y asymmetrische ausgebildet. Bei Nocken 5123A, 5123B, bei denen der Schnitt an der Oberseite vorgesehen ist, liegen die Nocken 5123A, 5123B am oberen Rand der zugehörigen Kabelbahnöffnungen 123 an. Bei benachbarten Nocken 5123A, 5123B, bei denen der Schnitt an der Unterseite vorgesehen ist, liegen die Nocken 5123A, 5123B am unteren Rand der zugehörigen Kabelbahnöffnungen 123 an. Die Verbindungsvorrichtung 5 ist daher nach oben und nach unten verankert.

Fig. 7b zeigt einen Teil der Kabelbahnwand 12 des Kabelbahnsegments 1A von Fig. 6a, das mit der zugeordneten Verbinderwand 512 der Verbindungsvorrichtung 5 verbunden ist, die Kopplungselemente 5123A, 5123B in einer zweiten vorzugsweisen Ausgestaltung aufweist. Die Kopplungselemente 5123A, 5123B sind wieder als Nocken ausgebildet, sind in dieser Ausgestaltung jedoch an der Oberseite und Unterseite durch einen Schnitt begrenzt und in Bezug zur Verbinderachse y symmetrisch ausgebildet. Die Verbindungsvorrichtung 5 ist daher durch jeden Nocken 5123A, 5123B nach oben und nach unten verankert.

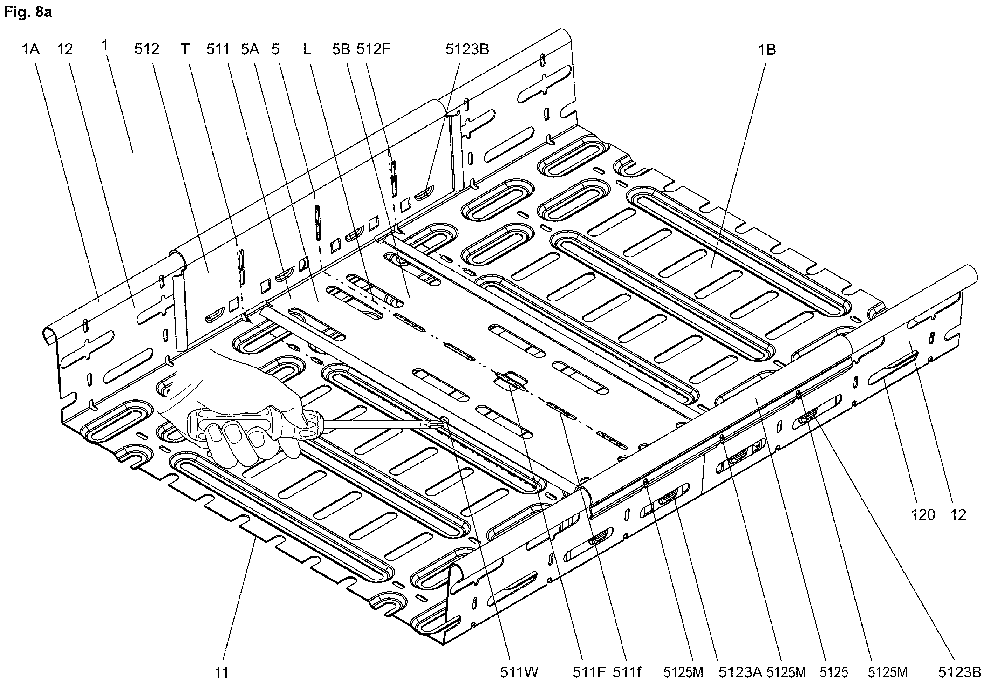

Fig. 8a zeigt eine erfindungsgemässe Kabelbahn 1 mit zwei Kabelbahnsegmenten 1A, 1B gemäss Fig. 3, die durch eine vorzugsweise ausgestaltete Verbindungsvorrichtung 5, die Fensteröffnungen 511F, 511f, 512F, Markierungen 5125M und Werkzeugaufnahmen 511W aufweist, miteinander verbunden sind.

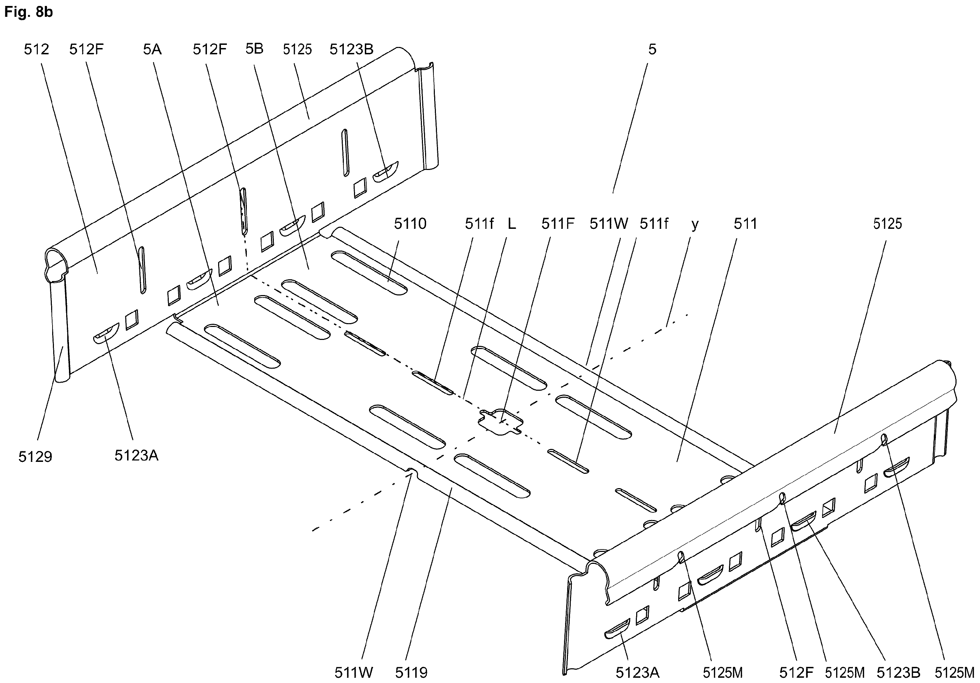

Fig. 8b zeigt die Verbindungsvorrichtung 5 von Fig. 8a. Die Verbindungsvorrichtung 5 kann beispielsweise mehrere oder alle Merkmale der Verbindungsvorrichtung 5 von Fig. 6b aufweisen und durch Fensteröffnungen 511F, 511f, 512F und/oder Markierungen 5125M und/oder Werkzeugaufnahmen 511W ergänzt werden.

Die Fensteröffnungen 511F, 511f, 512F und Markierungen 5125M sind entlang der Symmetrielinie L angeordnet, die die Verbindersegmente 5A, 5B voneinander trennt und die nach der Verbindung der Kabelbahnsegmente 1A, 1B oberhalb der Stossstelle S der Kabelbahnsegmente 1A, 1B liegt. Durch die Fensteröffnungen 511F, 511f, 512F, die im Verbinderboden 511 und den Verbinderwänden 512 vorgesehen sind, kann daher die korrekte Positionierung der Verbindungsvorrichtung 5 überprüft werden. Eine grössere Fensteröffnung 511F ist in der Mitte des Verbinderbodens 511 angeordnet und wird durch die Verbinderachse y durchlaufen.

Markierungen 5125M sind in den Abschlussteilen 5125 der Verbinderwände 512 vorgesehen. Die Markierungen 5125M werden bei der Montage der Verbindungsvorrichtung 5 korrespondierend zu Markierungen oder Öffnungen 120 der Kabelbahnwände 12 ausgerichtet, wonach die Verbindungsvorrichtung 5 in den Querschnitt der Kabelbahnsegmente 1A, 1B gestossen wird, bis die Kopplungselemente 5123A, 5123B in korrespondierende Öffnungen 120 der Kabelbahnwände 12 einrasten können. Mittels der Markierungen 5125M können die von den Kabelbahnwänden 12 verdeckten Kopplungselemente 5123A, 5123B daher präzise in die Öffnungen 120 der Kabelbahnwände 12 eingeführt werden.

Werkzeugaufnahmen 511W sind beidseitig an den Eingangsteilen 5119 des Verbinderbodens 511 entlang der Verbinderachse y vorgesehen. In Fig. 8a wird mit einem Schraubendreher in eine der Werkzeugaufnahmen 511W eingegriffen, um die Verbindungsvorrichtung 5 anzuheben und von den Kabelbahnsegmenten 1A, 1B zu lösen.

### Bezugszeichenliste

- 1: Kabelbahn mit einer Verbindungsvorrichtung 5
- 1': Kabelbahn ohne Verbindungsvorrichtung
- 1A: erstes Kabelbahnsegment
- 1B: zweites Kabelbahnsegment
- 10: Kabelführungsvorrichtung mit Verbindungsvorrichtung 5
- 10': Kabelführungsvorrichtung ohne Verbindungsvorrichtung
- 11: Kabelbahnboden
- 11M: Mittelbereich des Kabelbahnbodens
- 11S: Seitenbereiche des Kabelbahnbodens
- 110: Bodenperforationen
- 111: Transversalsicken
- 1110: Transversalschlitz
- 112: Axialsicken
- 1120: Axialschlitz
- 113: Kabelbahnöffnungen im Kabelbahnboden 11
- 12: Kabelbahnwände
- 120: Wandperforationen
- 123: Kabelbahnöffnungen in den Kabelbahnwänden 12
- 125: Wandabschluss
- 2: Ausleger
- 3: Halteprofile, beispielsweise Deckenstützen
- 5: Verbindungsvorrichtung
- 5A: erstes Verbindersegment
- 5B: zweites Verbindersegment
- 511: Verbinderboden
- 511F, 511f: Fensteröffnungen
- 511W: Werkzeugaufnahme
- 5110: Montageöffnungen im Verbinderboden 511
- 5113A: erste Verbindungselemente am Verbinderboden 511
- 5113B: zweite Verbindungselemente am Verbinderboden 511
- 51131: erstes Verbindungsteil
- 51132: zweites Verbindungsteil
- 5119: bodenseitige Eingangsteile
- 512: Verbinderwände
- 512F: Markierungsöffnungen in den Verbinderwänden 512
- 5120: Montageöffnungen in den Verbinderwänden 512
- 5123A: erste Kopplungselemente an den Verbinderwänden 512
- 5123B: zweite Kopplungselemente an den Verbinderwänden 512
- 51231: erstes Kopplungsteil
- 51232: zweites Kopplungsteil
- 5125: Abschlussteile
- 5125M: Markierungen an den Abschlussteilen 5125
- 5129: wandseitige Eingangsteile
- 8: Arretierelemente, Sicherungselemente
- 81: Verbindungsschraube
- 82: Schraubenmutter
- 9: Kabel, Rohre, Leitungen und dergleichen
- a: Stützabstand
- B: Kabelbahnquerschnitt
- L: Symmetrielinie
- Q: Verbinderquerschnitt
- S: Stossstelle
- T: Trennlinie
- T': Trennlinie nach Abtrennung eines Kabelbahnsegments 1'
- x: Kanalachse
- y: Verbinderachse

## Patentansprüche

1. Kabelbahnsystem zur Erstellung einer Kabelbahn (1) mit wenigstens einem ersten und einem zweiten Kabelbahnsegment (1A, 1B), die gleichartig oder identisch ausgebildet sind und die je einen Kabelbahnboden (11) und beidseits einstückig daran anschliessende und dazu senkrecht oder geneigt ausgerichtete Kabelbahnwände (12), eine gerade oder entlang einer Kurve verlaufende Kabelbahnachse (x), einen Kabelbahnquerschnitt (B) und Kabelbahnöffnungen (113, 123) aufweisen, und mit einer Verbindungsvorrichtung (5),
- die zum Verbinden des ersten und zweiten Kabelbahnsegments (1A, 1B) vorgesehen ist,
- die einen Verbinderboden (511) und beidseits einstückig daran anschliessende und dazu senkrecht oder geneigt ausgerichtete Verbinderwände (512) aufweist,
- die ein U-Profil mit einer Verbinderachse (y) und einem Verbinderquerschnitt (Q) aufweist, und
- die bezüglich einer Symmetrielinie (L) in ein erstes Verbindersegment (5A) und in ein zweites Verbindersegment (5B) unterteilt ist, die identisch oder funktionsgleich ausgebildet und in entgegengesetzte Richtungen ausgerichtet sind, wobei
das erste Verbindersegment (5A) mit ersten Verbindungselementen (5113A) und/oder mit ersten Kopplungselementen (5123A) versehen und damit durch Eingriff in entsprechende Kabelbahnöffnungen (113, 123) mit dem ersten Kabelbahnsegment (1A) verbindbar ist, und
das zweite Verbindersegment (5B) mit zweiten Verbindungselementen (5113B) und/oder mit zweiten Kopplungselementen (5123B) versehen und damit durch Eingriff in entsprechende Kabelbahnöffnungen (113, 123) mit dem zweiten Kabelbahnsegment (1B) verbindbar ist,
**dadurch gekennzeichnet,**
**dass** der Verbinderquerschnitt (Q) der Verbindungsvorrichtung (5) kleiner ist als der Kabelbahnquerschnitt (B), sodass die Verbindungsvorrichtung (5) in die Kabelbahnsegmente (1A, 1B) ersetzbar ist; und
**dass** die ersten und zweiten Verbindungselemente (5113A, 5113B) und/oder die ersten und zweiten Kopplungselemente (5123A, 5123B) nach aussen gerichtet und beim Einsetzen der Verbindungsvorrichtung (5) in die Kabelbahnsegmente (1A, 1B) durch Kabelbahnöffnungen (113, 123) gegen die Aussenseite der Kabelbahnsegmente (1A, 1B) führbar sind.

2. Kabelbahnsystem nach Anspruch 1, **dadurch gekennzeichnet, dass** die ersten und zweiten Verbindungselemente (5113A, 5113B) und/oder die ersten und zweiten Kopplungselemente (5123A, 5123B) derart ausgerichtet sind, dass sie bei einer Verschiebung der Verbindungsvorrichtung (5) senkrecht oder parallel zur Kabelbahnachse (x) in die Kabelbahnöffnungen (113, 123) eingreifen und/oder einrasten können.

3. Kabelbahnsystem nach Anspruch 1 oder 2, **dadurch gekennzeichnet, dass** die ersten und zweiten Verbindungselemente (5113A, 5113B) am Verbinderboden (511) angeordnet oder angeformt und zum Eingriff in Kabelbahnöffnungen (113) am Kabelbahnboden (11) der Kabelbahnsegmente (1A, 1B) vorgesehen sind und/oder dass die ersten und zweiten Kopplungselemente (5123A, 5123B) an den Verbinderwänden (512) angeordnet oder angeformt und zum Eingriff in Kabelbahnöffnungen (123) in den Kabelbahnwänden (12) der Kabelbahnsegmente (1A, 1B) vorgesehen sind.

4. Kabelbahnsystem nach einem der Ansprüche 1, 2 oder 3, **dadurch gekennzeichnet, dass** die ersten und zweiten Verbindungselemente (5113A, 5113B) als elastische oder unelastische Rastelemente, Haken oder Nocken ausgebildet sind und/oder dass die ersten und zweiten Kopplungselemente (5123A, 5123B) als elastische oder unelastische Rastelemente, Haken oder Nocken ausgebildet sind.

5. Kabelbahnsystem nach einem der Ansprüche 1 - 4, **dadurch gekennzeichnet,**
a) **dass** die Kabelbahnwände (12) und die Verbinderwände (512) nach aussen geneigt sind und der Neigungswinkel der vorzugsweise elastisch drehbaren Verbinderwände (512) etwa dem Neigungswinkel der Kabelbahnwände (12) entspricht und dass die Breite des Verbinderbodens (511) vorzugsweise der Breite des Kabelbahnbodens (11) entspricht; oder
b) **dass** die Kabelbahnwände (12) und die Verbinderwände (512) nach aussen geneigt sind, wobei der Neigungswinkel der elastisch drehbaren Verbinderwände (512) vorzugsweise um 5° bis 15° grösser ist als der Neigungswinkel der Kabelbahnwände (12) und dass die Breite des Verbinderbodens (511) vorzugsweise der Breite des Kabelbahnbodens (11) entspricht.

6. Kabelbahnsystem nach einem der Ansprüche 1 - 5 **dadurch gekennzeichnet, dass** die ersten und zweiten Verbindungselemente (5113A, 5113B) und/oder die ersten und zweiten Kopplungselemente (5123A, 5123B) ausgeschnitten und ausgeformt sind und/oder, dass einzelne der ersten und zweiten Verbindungselemente (5113A, 5113B) und/oder einzelne der ersten und zweiten Kopplungselemente (5123A, 5123B) um 180° gegeneinander gewendet sind.

7. Kabelbahnsystem nach einem der Ansprüche 1 - 6, **dadurch gekennzeichnet, dass** der Verbinderboden (511) und/oder die Verbinderwände (512) an den einander gegenüberliegenden Enden entlang der Verbinderachse (y) mit in den Verbinderquerschnitt (Q) hinein gerundeten oder wellenförmigen Eingangsteilen (5119, 5129) versehen sind.

8. Kabelbahnsystem nach einem der Ansprüche 1 - 7, **dadurch gekennzeichnet, dass** die Verbinderwände (512) an den vom Verbinderboden (511) abgewandten Enden mit je einem elastischen oder festen Abschlussteil (5125) versehen sind, das zur formschlüssigen Verbindung mit einem dazu korrespondierenden Wandabschluss (125) der Kabelbahnsegmente (1A, 1B) ausgebildet ist.

9. Kabelbahnsystem nach einem der Ansprüche 1 - 8, **dadurch gekennzeichnet, dass** die Verbinderwände (512) und/oder der Verbinderboden (511) und/oder das Abschlussteil (5125) entlang der Symmetrielinie (L) angeordnete Fensteröffnungen (511F, 511f, 512F) und/oder Markierungen (5125M) aufweisen und/oder dass der Verbinderboden (511) im ersten oder zweiten Verbindersegment (5A; 5B) oder im ersten und zweiten ersten und zweiten Verbindersegment (5A; 5B) je wenigstens eine Werkzeugaufnahme (511W) aufweist, mittel der die Verbindungsvorrichtung (5) lösbar ist.

10. Kabelbahnsystem nach einem der Ansprüche 1 - 9, **dadurch gekennzeichnet, dass** der Verbinderboden (511) entlang der Verbinderachse (y) eine geringere Länge aufweist als die Verbinderwände (512), deren Länge vorzugsweise um einen Faktor in einem Bereich von 1.5 - 4 grösser ist als die Länge des Verbinderbodens (511).

11. Kabelbahn (1) gefertigt mit Elementen des Kabelbahnsystems gemäss einem der Ansprüche 1 - 10, mit wenigstens zwei an einer Stossstelle (S) stirnseitig gegeneinander ausgerichteten Kabelbahnsegmenten (1A, 1B), die durch eine Verbindungsvorrichtung (5) miteinander verbunden sind, die einen Verbinderboden (511) und beidseits einstückig daran anschliessende elastische oder unelastische Verbinderwände (512) aufweist und die in die Endstücke der miteinander verbundenen Kabelbahnsegmente (1A, 1B) eingesetzt ist und innerhalb des Kabelbahnquerschnitts (B) mittels ersten und zweiten Verbindungselementen (5113A, 5113B) und/oder mittels ersten und zweiten Kopplungselementen (5123A, 5123B) gehalten ist, die durch Kabelbahnöffnungen (113, 123) gegen die Aussenseite der Kabelbahn (1) geführt sind, wobei die Kabelbahnsegmente (1A, 1B) und die Verbindungsvorrichtung (5) durch eine gegenseitige Verschiebung parallel oder senkrecht zueinander miteinander verbunden wurden.

12. Kabelbahn (1) nach Anspruch 11, **dadurch gekennzeichnet, dass** im Kabelbahnboden (11) der Kabelbahnsegmente (1A, 1B) Bodenperforationen (110) und in den Kabelbahnwänden (12) der Kabelbahnsegmente (1A, 1B) Wandperforationen (120) entlang von Trennlinien (T) angeordnet sind, die in einer Ebene senkrecht zur Kanalachse (x) verlaufen und dass die den Trennlinien (T) zugeordneten Bodenperforationen (110) und Wandperforationen (120) für jede der Trennlinien (T) eine Solltrennstelle bilden, die mit einem Abstand von benachbarten Kabelbahnöffnungen (113, 123) vorgesehen sind, der entsprechend dem Abstand zwischen der Symmetrielinie (L) der Verbindungsvorrichtung (5) und den ersten und zweiten Verbindungselementen (5113A, 5113B) und/oder den ersten und zweiten Kopplungselementen (5123A, 5123B) gewählt ist.

13. Kabelbahn (1) nach Anspruch 11 oder 12, **dadurch gekennzeichnet, dass** die Verbinderwände (512) an den vom Verbinderboden (511) abgewandten Enden Abschlussteile (5125) aufweisen, dass die Kabelbahnwände (12) an den vom Kabelbahnboden (11) abgewandten Enden Wandabschlüsse (125) aufweisen, und dass die Abschlussteile (5125) und die Wandabschlüsse (125) zumindest teilweise spielfrei ineinander eingreifen.

14. Kabelbahnsystem nach einem der Ansprüche 11 - 13, **dadurch gekennzeichnet, dass** der Verbinderboden (511) und/oder die Verbinderwände (512) an den einander gegenüberliegenden Enden entlang der Verbinderachse (y) mit in den Verbinderquerschnitt (Q) hinein gerundeten oder wellenförmigen Eingangsteilen (5119, 5129) versehen sind.

15. Kabelbahnsystem nach einem der Ansprüche 11-14, **dadurch gekennzeichnet,**
**dass** die Verbinderwände (512) an den vom Verbinderboden (511) abgewandten Enden mit je einem Abschlussteil (5125) versehen sind, das zur formschlüssigen Verbindung mit einem dazu korrespondierenden Wandabschluss (125) der Kabelbahnsegmente (1A, 1B) ausgebildet ist und/oder
**dass** der Verbinderboden (511) entlang der Verbinderachse (y) eine geringere Länge aufweist als die Verbinderwände (512), deren Länge vorzugsweise um einen Faktor in einem Bereich von 1.5 - 4 grösser ist als die Länge des Verbinderbodens (511).
